(19)

Europäisches
Patentamt
European
Patent Office
Office européen
des brevets

(11) **EP 4 369 581 A1**

(12) **EUROPEAN PATENT APPLICATION**

(43) Date of publication:
**15.05.2024   Bulletin 2024/20**

(21) Application number: **23208354.3**

(22) Date of filing: **07.11.2023**

(51) International Patent Classification (IPC):
*H02M 1/00* (2006.01)          *H02M 1/40* (2007.01)
*H02M 3/00* (2006.01)          *H02M 3/335* (2006.01)

(52) Cooperative Patent Classification (CPC):
**H02M 3/33573; H02M 1/0048; H02M 1/0058;
H02M 1/0064; H02M 1/40; H02M 3/015;
H02M 3/33584**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.11.2022   US 202263382792 P
01.11.2023   US 202318499805**

(71) Applicant: **Deere & Company
Moline, IL 61265 (US)**

(72) Inventors:
• **SINGH, Brij N.
Fargo, 58102 (US)**
• **FU, Tianjun
Fargo, 58102 (US)**
• **WEHRI, Zachary
Fargo, 58102 (US)**

(74) Representative: **West, Jonathan David
Reddie & Grose LLP
The White Chapel Building
10 Whitechapel High Street
London E1 8QS (GB)**

(54) **REDUCED ENERGY LOSS CONTROL METHODS FOR DC-DC CONVERTERS**

(57)    At least one example embodiment provides a system comprising a three-phase direct-current-to-direct-current converter (DC-DC converter) including a three-phase primary converter coupled to a three-phase secondary converter via at least one transformer; and a controller configured to cause the system to, obtain a load curve based on an operational load ratio or percentage of the three-phase DC-DC converter, the load curve associated with at least one phase of the primary converter and the secondary converter, and adjust or maintain a modulation frequency of the at least one phase of the primary converter and the secondary converter consistent with an operation point on the obtained load curve.

FIG. 1

**Description**

CROSS-REFERENCE TO RELATED APPLICATIONS

This application claims priority under 35 U.S.C. § 119(e) to U.S. Provisional Appln. No. 63/382,792 filed on November 8, 2022, the entire contents of which are hereby incorporated by reference.

**FIELD**

Example embodiments are related to three-phase direct current (DC)-to-DC (DC-DC) converters, such as dual active bridge DC-DC converters, and methods of controlling the DC-DC converters.

**BACKGROUND**

DC-DC converters convert an input DC voltage to an output DC voltage.

SUMMARY

At least one example embodiment provides a system comprising a three-phase direct-current-to-direct-current converter (DC-DC converter) including a three-phase primary converter coupled to a three-phase secondary converter via at least one transformer; and a controller configured to cause the system to, obtain a load curve based on an operational load ratio or percentage of the three-phase DC-DC converter, the load curve associated with at least one phase of the primary converter and the secondary converter, and adjust or maintain a modulation frequency of the at least one phase of the primary converter and the secondary converter consistent with an operation point on the obtained load curve.

At least one example embodiment provides a method of controlling a three-phase direct-current-to-direct-current converter (DC-DC converter) including a three-phase primary converter is coupled to a three-phase secondary converter via at least one transformer, the method comprising obtaining a load curve based on an operational load ratio or percentage of the three-phase DC-DC converter, the load curve associated with at least one phase of the primary converter and the secondary converter; and adjusting or maintaining a modulation frequency of the at least one phase of the primary converter and the secondary converter consistent with an operation point on the obtained load curve.

BRIEF DESCRIPTION OF THE DRAWINGS

Example embodiments will be more clearly understood from the following detailed description taken in conjunction with the accompanying drawings. FIGS. 1-15 represent non-limiting, example embodiments as described herein.

FIG. 1 illustrates a DC-DC converter according to one or more example embodiments;
FIGS. 2A-2B illustrate three-phase bridges in the DC-DC converter according to one or more example embodiments;
FIG. 3 illustrates a DC-DC converter with variable inductors according to one or more example embodiments;
FIGS. 4A-4B illustrate timing diagrams of pulse-width-modulation (PWM) output voltages and phase currents according to one or more example embodiments;
FIG. 5A illustrates a graph of converter power loss versus modulation frequency, along with associated load curves at different load percentages or ratios;
FIG. 5B illustrates a graph of inductance of the variable inductor of FIG. 3 versus saturation current flowing through a variable inductor;
FIG. 6 illustrates a block diagram of a power loss reduction control logic for a DC-DC converter to output switching controls signal at a target modulation frequency or target modulation frequencies for a primary converter, a secondary converter and a variable inductor according to one or more example embodiments;
FIG. 7 illustrates a graph of converter power difference versus modulation frequency, along with associated load curves at different load percentages or ratios;
FIG. 8 illustrates a block diagram of a power difference reduction control logic for a DC-DC converter to output switching controls signal at a target modulation frequency or target modulation frequencies for a primary converter, a secondary converter and a variable inductor according to one or more example embodiments;
FIG. 9A illustrates a block diagram of a power difference reduction control logic with phase current balancing for a DC-DC converter to output switching controls signal at a target modulation frequency or target modulation frequencies for a primary converter, a secondary converter and a variable inductor according to one or more example embodiments;

FIG. 9B illustrates a block diagram for generating an adjusted saturated current according to one or more example embodiments;

FIGS. 10A-10B illustrate a block diagram for generating PWM signals for reducing a DC current offset according to one or more example embodiments;

FIGS. 11A-11C illustrates timing diagrams of PWM signals according to one or more example embodiments;

FIG. 12 illustrates a DC-DC converter according to one or more example embodiments;

FIG. 13 illustrates a DC-DC converter according to one or more example embodiments;

FIG. 14 illustrates a control logic for PWM duty adjustment for DC current offset and neutral point voltage shift correction; and

FIG. 15 illustrates a method of reducing energy loss in a three-phase DC-DC converter.

DETAILED DESCRIPTION

Some example embodiments will now be described more fully with reference to the accompanying drawings in which some example embodiments are illustrated.

Accordingly, while example embodiments are capable of various modifications and alternative forms, embodiments thereof are shown by way of example in the drawings and will herein be described in detail. It should be understood, however, that there is no intent to limit example embodiments to the particular forms disclosed, but on the contrary, example embodiments are to cover all modifications, equivalents, and alternatives falling within the scope of the claims. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Portions of example embodiments and corresponding detailed description are presented in terms of software, or algorithms and symbolic representations of operation on data bits within a computer memory. These descriptions and representations are the ones by which those of ordinary skill in the art effectively convey the substance of their work to others of ordinary skill in the art. An algorithm, as the term is used here, and as it is used generally, is conceived to be a self-consistent sequence of steps leading to a result. The steps are those requiring physical manipulations of physical quantities. Usually, though not necessarily, these quantities take the form of optical, electrical, or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

In the following description, illustrative embodiments will be described with reference to acts and symbolic representations of operations (e.g., in the form of flowcharts) that may be implemented as program modules or functional processes including routines, programs, objects, components, data structures, etc., that perform particular tasks or implement particular abstract data types and may be implemented using existing hardware.

Such existing hardware (e.g., data processors and controllers) may be implemented using processing or control circuitry such as, but not limited to, one or more processors, one or more Central Processing Units (CPUs), one or more microcontrollers, one or more arithmetic logic units (ALUs), one or more digital signal processors (DSPs), one or more microcomputers, one or more field programmable gate arrays (FPGAs), one or more System-on-Chips (SoCs), one or more programmable logic units (PLUs), one or more microprocessors, one or more Application Specific Integrated Circuits (ASICs), or any other device or devices capable of responding to and executing instructions in a defined manner.

It should be borne in mind, however, that all of these and similar terms are to be associated with the appropriate physical quantities and are merely convenient labels applied to these quantities. Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

In this application, including the definitions below, the term 'module' may be replaced with the term 'circuit.' The term 'module' may refer to, be part of, or include processor hardware (shared, dedicated, or group) that executes code and memory hardware (shared, dedicated, or group) that stores code executed by the processor hardware.

The module may include one or more interface circuits. In some examples, the interface circuits may include wired or wireless interfaces that are connected to a local area network (LAN), the Internet, a wide area network (WAN), or combinations thereof. The functionality of any given module of the present disclosure may be distributed among multiple modules that are connected via interface circuits.

Further, at least one embodiment of the invention relates to a non-transitory computer-readable storage medium comprising electronically readable control information stored thereon, configured such that when the storage medium is used in a controller of a DC-DC converter, at least one embodiment of the method is carried out.

Even further, any of the aforementioned methods may be embodied in the form of a program. The program may be stored on a non-transitory computer readable medium and is adapted to perform any one of the aforementioned methods when run on a computer device (a device including a processor). Thus, the non-transitory, tangible computer readable medium is adapted to store information and is adapted to interact with a data processing facility or computer device to execute the program of any of the above mentioned embodiments and/or to perform the method of any of the above mentioned embodiments.

The computer readable medium or storage medium may be a built-in medium installed inside a computer device main body or a removable medium arranged so that it can be separated from the computer device main body. The term computer-readable medium, as used herein, does not encompass transitory electrical or electromagnetic signals propagating through a medium (such as on a carrier wave); the term computer-readable medium is therefore considered tangible and non-transitory. Furthermore, various information regarding stored images, for example, property information, may be stored in any other form, or it may be provided in other ways.

The term code, as used above, may include software, firmware, and/or microcode, and may refer to programs, routines, functions, classes, data structures, and/or objects.

The term memory is a subset of the term computer-readable medium. The term computer-readable medium, as used herein, does not encompass transitory electrical or electromagnetic signals propagating through a medium (such as on a carrier wave); the term computer-readable medium is therefore considered tangible and non-transitory. Non-limiting examples of the non-transitory computer-readable medium include, but are not limited to, rewriteable non-volatile memory devices (including, for example flash memory devices, erasable programmable read-only memory devices, or a mask read-only memory devices); volatile memory devices (including, for example static random access memory devices or a dynamic random access memory devices); magnetic storage media (including, for example an analog or digital magnetic tape or a hard disk drive); and optical storage media (including, for example a CD, a DVD, or a Blu-ray Disc). Examples of the media with a built-in rewriteable non-volatile memory, include but are not limited to memory cards; and media with a built-in ROM, including but not limited to ROM cassettes; etc. Furthermore, various information regarding stored images, for example, property information, may be stored in any other form, or it may be provided in other ways. The term data storage device may be used interchangeably with computer-readable medium.

In accordance with at least one embodiment, a method of controlling a three phase direct-current-to-direct-current (DC-DC) converter is disclosed in which a primary converter is coupled to a secondary converter via a transformer. The method comprises adjusting a variable inductance coupled to a primary of the transformer to reduce a difference or offset (e.g., to cancel direct current (DC) offset current) between a primary low frequency signal component at a primary and a secondary low frequency component at the secondary to minimize the (current) flow of extraneous low frequency signal components that would otherwise result in thermal loss in the transformer (e.g., a core of the transformer).

Further, the method comprises adjusting or maintaining a modulation frequency or frequencies of the primary converter and a secondary converter consistent with an operation point on the selected load curve, where the operation point minimizes the thermal energy dissipated from the direct-current-to-direct current converter.

A performance of a DC-DC converter (e.g., three-Phase Dual-Active-Bridge (DAB)-based DC/DC converter) can be optimized at a given modulation frequency (e.g., pulse width modulation (PWM) frequency).

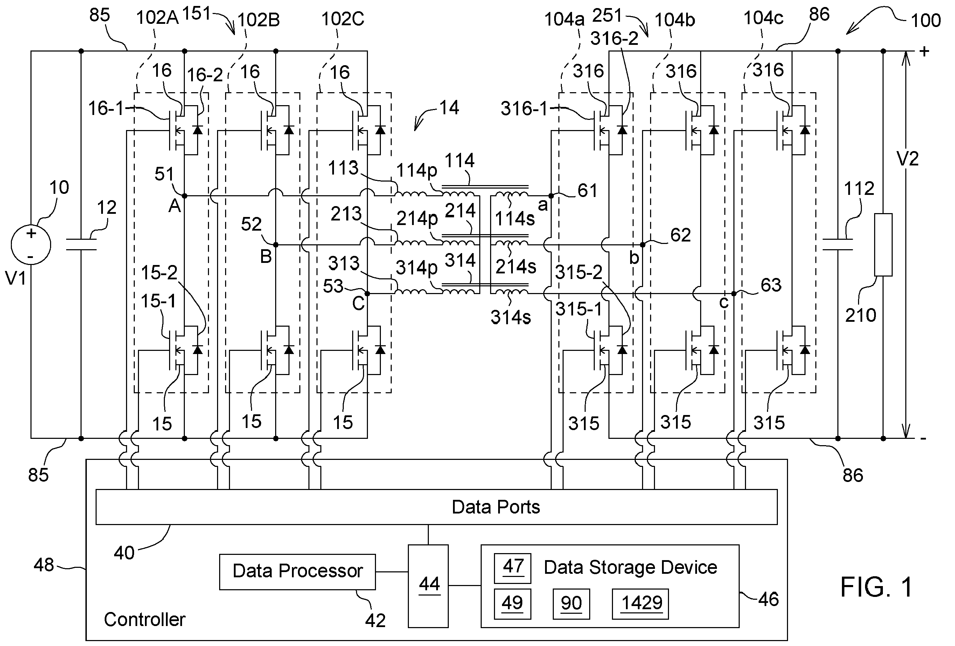

FIG. 1 illustrates a DC-DC converter according to one or more example embodiments. A DC-DC converter 100 comprises a three phase, dual-active bridge DC-DC converter with DC primary terminals 85 (e.g., DC input terminals) at a primary converter 151 and DC secondary terminals 86 (e.g., DC output terminals) at a secondary converter 251, where the DC-DC converter may operate unidirectionally or bidirectionally (e.g., to transfer electrical power or energy from the input to the output of the converter 100, or vice versa).

As shown in FIG. 1, a three-phase DC-DC converter 100 includes the primary converter (or input inverter bridge) 151 and the secondary converter (or output rectifier bridge) 251. The primary converter 151 includes three bridge portions 102A-102C, each of which corresponds to a separate phase and is coupled between direct current input terminals 85 of the primary converter 151. Similarly, the secondary converter 251 includes three bridge portions 104a-104c, each of which corresponds to a separate phase and is coupled between direct current secondary output terminals 86 of the secondary converter 251.

As should be understood, use of "A", "B" and "C" in the context of the DC-DC converter correspond to phases in the primary converter and use of "a," "b" and "c" correspond to phases in the secondary converter. When referring to phases of the DC-DC converter instead of separately the primary converter or the secondary converter, the phases may be referred to as A-a, B-b and C-c.

The alternating current (AC) terminals (A, B, C) of the primary converter 151 and the secondary AC terminals (a, b, c) of the secondary converter 251, respectively, are coupled together with transformers 114, 214 and 314, respectively, such as isolation transformers (e.g., isolating high frequency (HF) transformer). In one embodiment, in FIG. 1 the primary winding of each transformer is associated with a respective primary filter (e.g., input filter) or capacitor ($C_{in}$), which is coupled in parallel across the primary DC bus (at primary DC terminals V1). Meanwhile, the secondary winding is associated with a respective secondary filter (e.g., output filter) or the capacitor 112, which is coupled in parallel across the secondary DC bus (at secondary DC terminals V2) to form the 3-phase DAB DC/DC converter 100.

The transformers 114, 214 and 314 (e.g., isolation transformers) are coupled between the primary converter 151 and the secondary converter 251 for the three phases, respectively. A primary winding of the transformer 114 is coupled to an output terminal 51 of the bridge portion 102A and a secondary winding of the transformer 114 is coupled to an input terminal 61 of the bridge portion 104a. A primary winding of the transformer 214 is coupled to an output terminal 52 of the bridge portion 102B and a secondary winding of the transformer 214 is coupled to an input terminal 62 of the bridge portion 104b. Lastly, a primary winding of the transformer 314 is coupled to an output terminal 53 of the bridge portion 102C and a secondary winding of the transformer 314 is coupled to an input terminal 63 of the bridge portion 104c.

A load 210 (e.g., direct-current load) is arranged for coupling to the direct current output terminals 86; wherein an electronic controller 48 is configured to provide time-synchronized control signals to the control terminals of the primary switches (15-1, 16-1) and secondary switches (315-1, 316-1) to control the converter 100 or system to operate at a modulation frequency (e.g., pulse width modulation frequency).

Each bridge portion 104a-104c of the primary converter 151 includes a high side switch package and a low side switch package that are placed across a DC-link 12. Each switch package includes a diode and a switch (e.g., a MOSFET transistor). For example, the bridge portion 102A includes a high side switch package 16 and a low side switch package 15. The upper switch package 16 includes a MOSFET 16-1 and a diode 16-2. The lower switch package 15 similarly has a MOSFET 15-1 and a diode 15-2.

Each bridge portion of the secondary converter 251 includes a high side switch package and a low side switch package that are placed across a capacitor 112. Each switch package includes a diode and a MOSFET transistor. For example, the bridge portion 104a includes a high side switch package 316 and a low side switch package 315. The high side switch package 316 includes a MOSFET 316-1 and a diode 316-2. The low side switch package 315 similarly has a MOSFET 315-1 and a diode 315-2.

When the appropriate voltage is applied to the gate of an MOSFET transistor in a high side or low side switch package, the transistor may be activated and the drain may be coupled electrically to the emitter to supply electric power. The appropriate voltage depends on a rating of the transistor. For example, 14 V may be applied at the gate to turn the transistor on. Negative 8 V may be applied at the gate with to turn the transistor off.

Although MOSFET transistors are shown, field effect transistors, complementary metal oxide semiconductors, power transistors, or other suitable semiconductor devices may be used as a switch.

As used in this document, switch states indicate whether a properly functioning or unimpaired semiconductor device is active ("on" or "closed") or inactive ("off" or "open"). A failure of a semiconductor device to change states may result in a semiconductor device failing in an open state or a closed state, for example.

In one configuration, for each pair of switch packages in each bridge portion 102A-102C, the switched terminals of the transistor 15-1 of the low side switch package 15 are coupled in series to the switched terminals of the transistor 16-1 of the high side switch package 16 between the DC primary terminals 85. As illustrated in FIG. 1A, each switch package has a diode coupled in parallel to the switched terminals of the respective switch package.

For each pair of switch packages in each bridge portion 104a-104c, the switched terminals of the transistor 315-1 of the low side switch package 315 are coupled in series to the switched terminals of the transistor 316-1 of the high side switch package 316 between the DC secondary terminals 86. As illustrated in FIG. 1A, each switch package has a diode coupled in parallel to the switched terminals of the respective switch package.

In the primary converter 151, the low side switch package 15 and the high side switch package 16 of the bridge portion 102A are coupled together at a first output terminal 51 or a junction associated with a first phase alternating current signal. The low side switch package 15 and the high side switch package 16 of the bridge portion 102B are coupled together at a second output terminal 52 or a junction associated with a second phase alternating current signal. The low side switch package 15 and the high side switch package 16 of the bridge portion 102C are coupled together at a third output terminal 53 or a junction associated with a third phase alternating current signal.

In the secondary converter 251, the low side switch package 315 and the high side switch package 316 of the bridge portion 104a are coupled together at a first input terminal 61 or a junction associated with a first phase secondary alternating current signal. The low side switch package 315 and the high side switch package 316 of the bridge portion 104b are coupled together at a second input terminal 62 or a junction associated with a second phase secondary alternating current signal. The low side switch package 315 and the high side switch package 316 of the bridge portion 104c are coupled together at a third input terminal 63 or a junction associated with a third phase secondary alternating current signal.

Each of the transformers 114, 214 and 314 has at least one primary winding (114p, 214p, 314p) and at least one secondary winding (114s, 214s, 314s), where a transformer ratio ($N_{trans}$) represents a voltage ratio between the primary terminals and the secondary terminals, or between the primary winding and the secondary winding. For example, the primary winding ratio may represent the number of relative turns ($N_{trans}$) of the primary winding to the secondary winding. The voltage ratio or winding ratio (turn ratio) may depend upon the winding configuration, the conductor configuration, and the configuration of any core, such as ferromagnetic core, a ferrite core, or an iron core. Each of the transformers 114, 214 and 314 may have the same turn ratio $N_{trans}$.

In one embodiment, inductors or variable inductors 113, 213, 313 are coupled in series with the primary windings of the transformers 114, 214, 314, respectively. The transformers 114, 214 and 314 may be referred to as a three-phase transformer. In an alternate embodiment, the variable inductor is associated with a set of discrete inductors that can be connected, via a set of switches, in series, in a parallel, or both, to achieve an adjustable aggregate inductance. For example, the controller 48 or data processor 42 can control or adjust the variable inductor, or its associated switches, to tune the transformers 114, 214 and 314 for the target modulation frequency (e.g., of a pulse width modulation (PWM) signal) to minimize power loss, power difference or thermal dissipation of the converter 100.

An energy source 10 (e.g., battery, capacitor, or generator output) is coupled to the direct current (DC) primary terminals 85 (e.g., input terminals). A load 210 (e.g., active or passive load) is configured to be coupled to the direct current (DC) secondary terminals 86 (e.g., output terminals).

The DC primary terminals 85 are configured to operate at a different voltage level than the DC secondary terminals 86. In other embodiments, the DC primary terminals 85, the DC secondary voltage levels can have variable voltage levels that can fluctuate with the load 210 or operating conditions on a dynamic basis for each time interval (e.g., sampling time of DC voltage observed at the DC primary input and DC secondary output terminals of the converter). For example, the DC primary terminals 85 operate at a higher voltage level or higher voltage range (e.g., approximately 400 VDC to approximately 800 VDC) than a lower voltage level or lower voltage range (e.g., approximately 12 VDC to approximately 400 VDC) the DC secondary terminals 86. Accordingly, the electronic assembly or DC-DC converter 100 supports a vehicle with different DC bus levels that are isolated from each other because the transformer blocks DC energy from passing through between transformer primary and transformer secondary.

In one embodiment, an electronic controller 48, is configured to provide time-synchronized control signals to the control terminals (e.g., gates) of the primary switches 15-1, 16-1, 315-1 and 316-1 to control the converter 100.

A controller 48 may have gate drivers 44, a microprocessor 42 coupled electrically to the gate drivers 44, and a data storage device memory 46 coupled electrically to the microprocessor 42 and having stored therein operating instructions for the microprocessor 42.

The gate driver 44 provides control signals to control terminals (e.g., gate or base). The gate of each transistor 15-1, 16-1, 315-1 and 316-1 is coupled electrically to a respective gate driver 44 that is dedicated to that transistor 15-1, 16-1, 315-1 and 316-1 and may provide a DC voltage (e.g., greater than 72 VDC) to turn on and off that transistor 15-1, 16-1, 315-1 and 316-1. Thus, there may be a gate driver 44 for each transistor 15-1, 16-1, 315-1 and 316-1. The gate drivers 44 are under the control of the processor 42, which may employ a pulse-width-modulation (PWM) control scheme to control those gate drivers 44 and the transistors 15-1, 16-1, 315-1 and 316-1. Switching of transistors 15-1, 16-1, 315-1 and 316-1 results in DC-DC converter 100 to supply electric energy to the load 210 by withdrawing electric energy from the capacitor 112.

The data storage device 46 comprises electronic memory, nonvolatile random-access memory, magnetic storage device, an optical storage device, or another device for storing, retrieving and managing data, files, data structures or data records. The data storage device 46 further stores instructions for the processor 42 to perform the functions described herein. The data ports 40 may comprise an input/output port, a data transceiver, a wireline transceiver, a wireless transceiver, buffer memory, or a combination of the foregoing items.

Voltage sensors are isolated devices that sense a high voltage DC bus and the power converter's mid-point output. These voltages are sensed with respect to negative DC bus of the power converter and send a voltage converted to 0V to 5V. Where 0V indicates that sensed high voltage is at 0V and 5V indicates that the sensed high voltage is at its typical value, e.g., 700V. A voltage sensor(s) 309a may measure voltages $V_{AN}$, $V_{BN}$ and $V_{CN}$. Similarly, a voltage sensor(s) 309b may measure voltages $V_{an}$, $V_{bn}$ and $V_{cn}$.

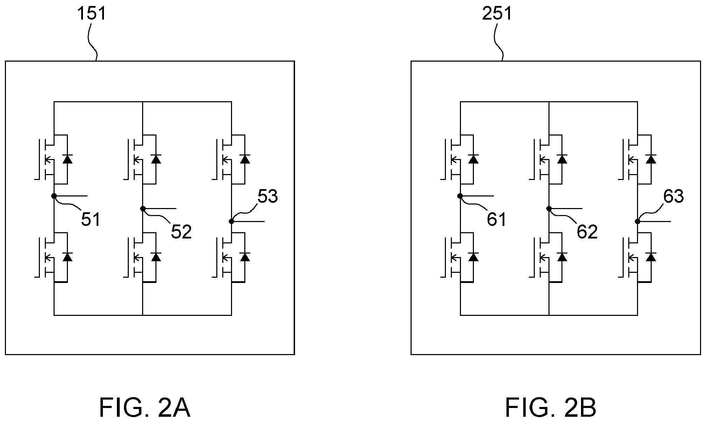

FIGS. 2A-2B illustrate the three-phase converters 151 and 251.

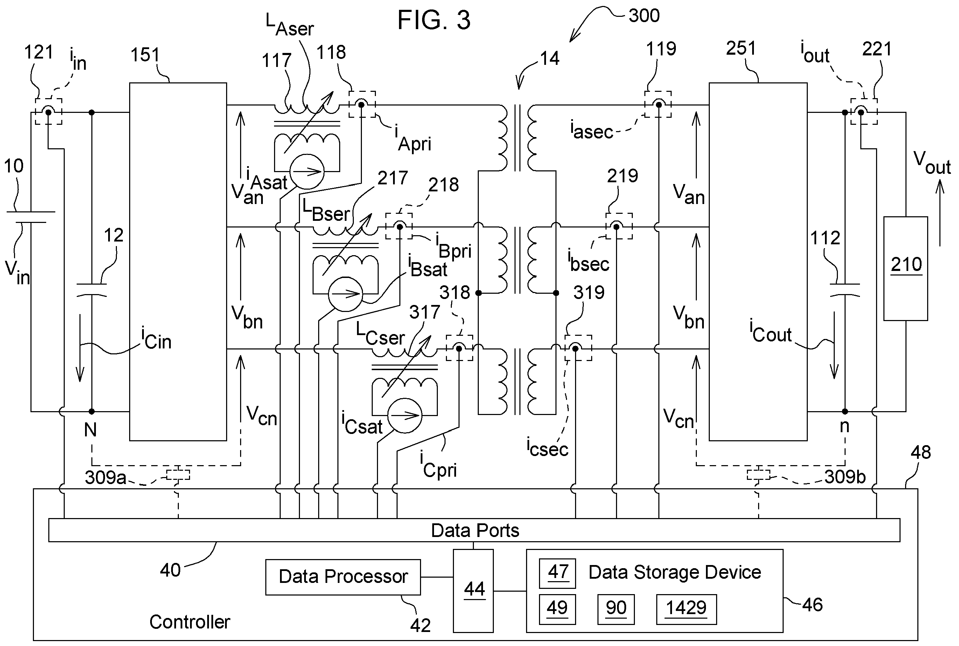

FIG. 3 illustrates a DC-DC converter with variable inductors according to one or more example embodiments. A DC-DC converter 300 is substantially the same as the DC-DC converter 100. For the sake of brevity, only the differences will be described.

The converter of FIG. 3 is similar to the converter of FIG. 1, except the converter 300 replaces the inductors 113, 213, 313 with variable inductors 117, 217, 317, respectively in series with the primary windings of the transformers 114, 214, 314.

Further, the electronic data processor 42 or electronic controller 48 can control the control inputs of switches to control or adjust the variable inductance of each of the variable inductors 117, 217, 317 by controlling a saturation current $i_{Asat}$, $i_{Bsat}$, $i_{Csat}$, for each of the variable inductors. Each variable inductor 117, 217, 317 may comprise any of the following: (a) an inductor with a variable, moveable core (e.g., ferrite or iron core) that is mechanically coupled to a shaft of an electric motor, a linear actuator, or servo-motor to move the core to vary the inductance, where the controller 48 is configured to control the rotation, direction, displacement (e.g., angular or linear), speed or torque of the electric motor, linear actuator or servo-motor; (b) a series network of inductors, where each inductor is coupled to two switches, where each terminal of a respective inductor is coupled to a terminal of a single-pole, double-throw switch to switchably change the total inductance of the series network between two or more inductances (e.g., first inductance value and second inductance value) responsive to a control signal from a data port of an electronic data processor; (c) a parallel network of inductors, each inductor coupled to two terminals of a double-pole, double throw switch, to switchably change the total inductance of the series network between two or more inductances (e.g., first inductance value and second inductance value) responsive to a control signal from a data port of an electronic data processor; and (d) a network of series and parallel inductors, each inductor coupled to one or more switches, to switchably change the total inductance of the series network between two or more inductances (e.g., first inductance value and second inductance value) responsive to a control signal from a data port of the controller 48.

The converter 300 further includes current sensors 121, 118, 218, 318, 119, 219, 319 and 221 to measure currents $i_{in}$, $i_{Apri}$, $i_{Bpri}$, $i_{cPri}$, $i_{asec}$, $i_{bsec}$, $i_{csec}$ and $i_{out}$, respectively.

In one embodiment, the primary converter 151 receives or draws power from a DC voltage-source 10 ($V_{in}$) and converts the received power to an isolated voltage-source, $V_{out}$, which is output of the secondary converter 251. The high-frequency pulse-width-modulated (PWM) switching of the switches in the primary converter 151 produces ripple current, $i_{Cin}$ which will flow through (e.g., and be filtered, smoothed, or attenuated by) input capacitor 12. The PWM switching of the primary converter 151 produces PWM voltage waveforms $V_{AN}$, $V_{BN}$ and $V_{CN}$ at primary AC terminals A, B and C (shown in FIG. 1), which result in flow of primary currents $i_{Apri}$, $i_{Bpri}$ and $i_{Cpri}$, respectively, through a respective series variable inductor ($L_{Aser}$, $L_{Bser}$, $L_{Cser}$) 117, 217, 317. The primary currents $i_{Apri}$, $i_{Bpri}$ and $i_{Cpri}$, establish flux in the magnetic core (e.g., iron composition, ferromagnetic or ferrite core) of the isolation transformers 114, 214 and 314, respectively.

Further, each phase a, b, c of PWM switching of the secondary converter 251 is phase-shifted and time synchronized with respect to the PWM switching of the primary converter 251. Therefore, the secondary converter 251 produces PWM phase voltages $V_{an}$, $V_{bn}$ and $V_{cn}$ at secondary AC terminals a, b, c (shown in FIG. 1), which results in flow of secondary currents $i_{asec}$, $i_{bsec}$ and $i_{csec}$, respectively.

For each of the three phases (A-a, B-b and C-c) of the DC-DC converter, the primary current (e.g., $i_{Apri}$) and secondary current (e.g., $i_{asec}$) are directly related to each other as per isolation transformer turn-ratio ($N_{trans}$:1) for an efficiently operating transformer at high frequencies (e.g., provided magnetizing current and/or eddy current of the isolation transformer is negligibly small). A negligibly small magnetizing current is required by the isolation transformer to operate properly; hence, maintaining a small magnetizing current requires minimizing low frequencies that approach DC, such that the primary currents ($i_{Apri}$, $i_{Bpri}$ and $i_{Cpri}$) are in-phase (or have an appropriate phase offset) with the secondary currents ($i_{asec}$, $i_{bsec}$ and $i_{csec}$).

The PWM switching of secondary converter 251 also generates ripple current $i_{Cout}$ which flows through output capacitor 112 (e.g., to filter, smooth or attenuate the ripple current). The load current is denoted as $i_{out}$ and output voltage across load is denoted as $V_{out}$.

In at least some example embodiments, the controller 48 (e.g., the data processor 42) can adjust or increase a primary inductor (e.g., inductor 113) or a variable primary inductor (e.g., 117) (e.g., from a first inductance value to a second inductance value, where the second inductance value is greater than the first inductance value) to reduce the magnetizing current.

The controller 48 is configured to control the respective inductance of variable inductor for each phase (of the three-phase transformer 14), alone or in conjunction with the relative phase of control signals applied by the driver to the control terminals of the switches (15-1, 16-1, 315-1 and 315-2, inclusive), to avoid saturation of the three-phase transformer 14, which would otherwise result in condition wherein the primary currents ($i_{Apri}$, $i_{Bpri}$ and $i_{Cpri}$) are no longer in-phase with the secondary current ($i_{asec}$, $i_{bsec}$ and $i_{csec}$).

The PWM switching of the secondary converter also generates ripple current, $i_{Cout}$, which flows through output capacitor 112 across the secondary DC bus. The primary DC bus and the secondary DC bus may operate at different voltage levels that are generally related by $N_{trans}$ or the winding ratio between the primary winding and the secondary winding of the isolation transformer 14.

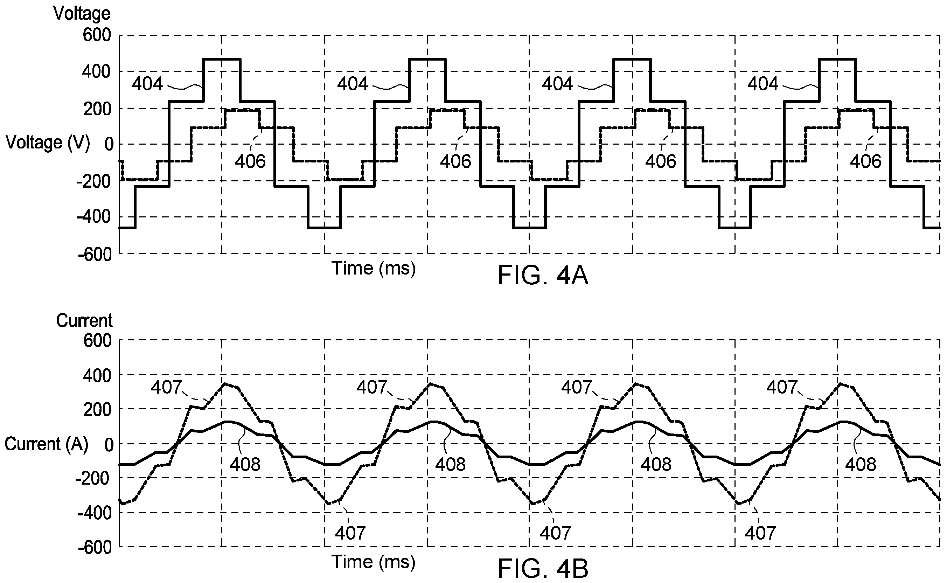

FIGS. 4A-4B illustrate timing diagrams of pulse-width-modulation (PWM) output voltages and phase currents according to one or more example embodiments. In FIG. 4A, $V_{AN}$ is the primary converter phase "A" voltage 404 with respect to the negative DC bus of the primary-side converter 151, $N_{trans}*V_{an}$ is voltage 406 with respect to the negative DC bus of the secondary-side converter 251 the secondary converter phase "a" where $V_{an}$ is the voltage of the secondary converter phase "a". In FIG. 4B, quantity $N_{trans}*i_A$ is a current 407 (where $i_A$ is the current of the primary converter phase "A") and quantity $i_a$ is the secondary side phase "a" current 408. Similarly, quantities $V_{BN}$, $V_{CN}$, $i_{Bpri}$, and $i_{Cpri}$ can be described for the phases B and C of the primary side and quantities $V_{bn}$, $V_{cn}$, $i_{bsec}$, and $i_{csec}$ can be described for the phases b and c of the secondary side of three-phase DAB-based DC/DC converter.

Although the primary voltage $V_{AN}$ is illustrated as greater than the secondary voltage $V_{an}$ in FIG. 4A, in an alternate embodiment, the primary voltage may be less than or equal to the secondary voltage. Here, the primary voltage may be associated with a higher voltage vehicle direct current bus (e.g., 700 VDC), whereas the secondary voltage may be associated with a lower voltage direct current bus (e.g., 12 VDC to 48 VDC). The primary current $i_A$ and the secondary current $i_a$ have minimum and maximum currents that occur at different times because of the phase delay or phase offset between the primary winding and secondary winding of the transformer.

Referring back to FIG. 3, the controller 48 is configured to estimate energy losses in elements of the converter, e.g., by integrating a power difference $P_{diff}$ between input power Pin and output power $P_{out}$ over a number of PWM cycles. The converter is configured to perform the functions described in U.S. Patent No. 10,749,441, the entire contents of which are incorporated by reference.

If the direct current (DC) input voltage 10 and DC output voltage of DC-DC converter vary along with variations in the load 210 at the output (V2); the output power, the maximum efficiency and optimized performance can no longer be maintained (e.g., guaranteed) over an entire range of the output power. For example, when output power widely varies from approximately ten percent (10%) to approximately one hundred percent (100%) (e.g., based on fluctuation in the output load (e.g., at DC terminal V2) or work tasks of a vehicle), the DC-DC converter (e.g., DAB-based DC/DC converter) may not operate at maximum possible efficiency over an entire range of the output power. In some cases, the fluctuation in the output power can degrade performance of the DC-DC converter, where power loss or thermal loss incurred by converter could vary widely and nonlinearly. Therefore, under conventional control methods optimized for one PWM frequency, the DC-DC converter (e.g., DAB-based DC/DC converter) can be susceptible to thermal management challenge; sometimes regardless of the packaging design of the DC-DC converter.

In at least one example embodiment, the controller 48 selects load curve data (e.g., a load curve) from a set of load curves stored in a look-up table stored in the data storage device 46. Each of the load curves may be associated with a corresponding ratio or percentages between a power transfer capability and a maximum power transfer.

In some example embodiments, the percentage load is determined by the controller 48 by the measured output power divided by maximum power rating of the converter and then obtained quantity multiplied by 100.

According to one or more example embodiments, the three-phase direct-current-to-direct-current converter (DC-DC converter) 300 includes a three-phase primary converter coupled to a three-phase secondary converter via at least one transformer; and the controller is configured to cause a system to including the converter 300 to obtain a load curve based on an operational load ratio or percentage of the three-phase DC-DC converter, the load curve associated with at least one phase of the primary converter and the secondary converter, and adjust or maintain a modulation frequency of the at least one phase of the primary converter and the secondary converter consistent with an operation point on the obtained load curve.

According to one or more example embodiments, the controller is configured to cause the system to adjust or maintain the modulation frequency for each of the three phases.

According to one or more example embodiments, the controller is configured to cause the system to adjust a variable inductance of each phase to reduce a difference or offset between a primary low frequency signal component at the primary converter and a secondary low frequency component at the secondary converter, each variable inductance being coupled to the at least one transformer.

According to one or more example embodiments, the controller is configured to cause the system to determine a saturation current to adjust the variable inductance for each phase.

According to one or more example embodiments, the controller is configured to cause the system to determine a saturation adjustment for each phase; apply the saturation adjustment to the determined current to generate a commanded current; and apply the commanded current to adjust the variable inductance.

According to one or more example embodiments, the controller is configured to cause the system to obtain a phase current for at least one phase of the DC-DC converter; filter the phase current to obtain a DC current; generate a duty offset based on the DC current; and generate a duty signal for the at least one phase based on the respective DC current and the duty offset.

According to one or more example embodiments, the controller is configured to cause the system to adjust the PWM duty signal for at least one of a high-side switch or a low-side switch to inject a compensating DC current offset to reduce an existing DC current offset.

According to one or more example embodiments, the controller is configured to cause the system to compare the DC current to an offset command, and generate the duty offset based on the comparison.

According to one or more example embodiments, the controller is configured to cause the system to measure a neutral point voltage, and adjust the duty signal based on the neutral point voltage.

According to one or more example embodiments, the controller is configured to cause the system to adjust a variable inductance of the at least one phase to reduce a difference or offset between a primary low frequency signal component at a primary and a secondary low frequency component at the secondary to minimize thermal energy, the variable inductance being coupled to a primary side of the at least one transformer.

According to one or more example embodiments, the controller is configured to cause the system to determine a saturation current to adjust the variable inductance.

According to one or more example embodiments, the controller is configured to cause the system to determine a saturation adjustment; apply the saturation adjustment to the determined current to generate a commanded current; and apply the commanded current to adjust the variable inductance.

According to one or more example embodiments, the controller is configured to cause the system to select the operation point, the operation point associated with a power loss minimization process based on the obtained load curve.

According to one or more example embodiments, the controller is configured to cause the system to select the operation point, the operation point associated with a power difference minimization process between the power at primary DC terminals and secondary DC terminals.

According to one or more example embodiments, the operation point is associated with a reduced thermal energy dissipated from the three phase DC-DC converter.

According to one or more example embodiments, a system comprises a three-phase direct-current-to-direct-current converter (DC-DC converter) including a three-phase primary converter coupled to a three-phase secondary converter via at least one transformer; and a controller configured to cause the system to adjust or maintain a modulation frequency of the at least one phase of the primary converter and the secondary converter consistent, determine an offset present in the at least one phase, and generate a duty signal for the at least one phase to reduce the offset.

According to one or more example embodiments, the offset is a DC current offset.

According to one or more example embodiments, the controller configured to cause the system to detect a neutral point voltage, and adjust the duty signal based on the detected neutral point voltage.

Power-Loss Reduction

In accordance with example embodiments, the electronic data controller 48 searches for a suitable family of load-dependent power-loss curves based on sets of candidate load-dependent power loss curves and selects load curve data from the family of load-dependent power-loss curves. Sets of load-dependent power-loss curves can be stored in a data storage device, as look-up tables 47, equations (e.g., polynomial equations), graphs, charts or in any other suitable data structure or format.

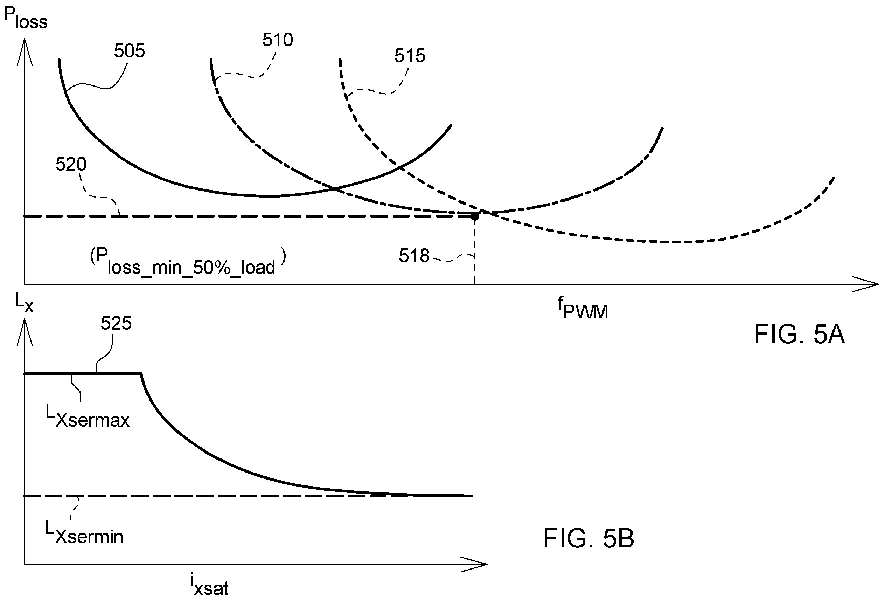

FIG. 5A illustrates a graph of converter power loss versus modulation frequency, along with associated load curves at different load percentages or ratios.

FIG. 5A illustrates example sets of candidate load-dependent power loss curves. There may be thousands of candidate load-dependent power-loss versus modulation frequency (e.g., PWM frequency) curves, however, for clarity only three curves are illustrated in FIG. 5A.

FIG. 5A illustrates a power loss curve 505 at 100% load, a power loss curve 510 at 50% load and a power loss curve 515 at 10% load. In FIG. 5A, the vertical axis represents power loss $P_{Loss}$ of the three-phase converter and the horizontal axis represents pulse width modulation frequency of the converter. As illustrated, load curves for higher loads operate with thermal efficiency at lower modulation frequencies, whereas load curves for lesser loads operate with thermal efficiency at higher modulation frequencies.

The load percentages are equal to or proportional to: (1) a ratio of observed load divided by maximum load and then multiplied by 0.01, or (2) a ratio of commanded load divided by maximum load and then multiplied by 0.01 (or divided by 100).

Depending upon output load, the controller 48 selects a potential optimum curve or potential preferential curve of the power-loss $P_{Loss}$ versus $f_{PWM}$ depicted in FIG. 5A. Then, the controller 48 sweeps modulation frequency or frequency range (e.g., PWM frequency or PWM frequency range) on this curve until a minimum loss point on the curve is identified/determined (e.g., where the minimum loss point represents both a local minima for the present selected family of curves and the global minima for all previously analyzed families of curves for any sampling period.) For example, for 50% load curve, the DAB control will sweep PWM frequency to get to a minimum power loss amount 520 on the 50% load curve 515 and determine the corresponding PWM frequency 518. Then the converter continues to operate at this point by using the identified PWM frequency 518 until load is changed. For example, as load demand changes from 50% to 100%, the system controller 48 will search for the 100% load curve and then determine the PWM frequency at the minimum operating power loss point for the 100% load curve 505.

In one embodiment, the controller 48 is configured to determine transformer parameters using sensed, measured or observed voltage $V_{in}$, a modulation frequency, PWM switching functions (e.g., space vector PWM or other modulation schemes), and signal signature of $i_{Apri}$, $i_{Bpri}$ and $i_{Cpri}$ (e.g., measured signals $i_{Apri}$, $i_{Bpri}$ and $i_{Cpri}$ and $i_{asec}$, $i_{bsec}$ and $i_{csec}$ have waveforms similar to those shown in FIG. 4B).

For determining transformer parameters with a machine learning system or artificial intelligence, the machine learning system will require some training. To train the system, at each start-up of the DC-DC converter, short duration PWM waveforms will be produced for power signals, $V_{XN}$ ('X' represents 'A', 'B' or 'C') and $V_{xn}$ ('x' represents 'a', 'b' or 'c') in sequence and then signatures of $i_X$ ('X' represents 'A', 'B' or 'C') and $i_x$ ('x' represents 'a', 'b' or 'c') will be observed to determine transformer parameters. This method can also be used to train power converter control systems to learn DC-DC converter behavior. By learning DC-DC converter behavior, it will be possible to track system related parameter changes. This automatic tracking of system parameters could be helpful in determination of aging of DC/DC converter's components and development of algorithms to detect or predict possible failures in accordance with predictive maintenance schedules and objective.

FIG. 5B illustrates a graph of inductance of a variable inductor of FIG. 3 versus saturation current flowing through a variable inductor.

The vertical axis indicates inductance $L_{Xser}$('X' represents 'A', 'B' or 'C') of the variable inductor; the horizontal axis indicates the saturated current $i_{Xsat}$ of the variable inductor. As illustrated, the inductance of the variable inductor can vary consistent with the applicable power curve between a maximum inductance $L_{XserMax}$ and a minimum inductance $L_{XserMin}$. In FIG. 5B, for a given phase X, the graph or curve of variable inductance $L_{Xser}$ versus inductor saturation current $i_{Xsat}$ flowing through the variable inductor is consistent with a maximum power transfer from the primary converter 151 to the secondary converter 251. The graph or curve may be stored in memory section 90 of the data storage device 46. The controller 48 is configured to determine an output power $P_{out}$ in accordance with the following equation:

$$P_{out} = \frac{N_{trans}V_{in}V_{out}}{2\pi f_{PWM}L_{Xser}} \phi \left[\frac{2}{3} - \frac{\phi}{2\pi}\right] \ \forall \ 0 \le \phi \le \frac{\pi}{3} \qquad (1)$$

$$P_{out} = \frac{N_{trans}V_{in}V_{out}}{2\pi f_{PWM}L_{Xser}} \left[\phi - \frac{\phi^2}{\pi} - \frac{\pi}{18}\right] \ \forall \ \frac{\pi}{3} \le \phi \le \frac{2\pi}{3} \qquad (2)$$

where $P_{out}$ is the output power at the load 210; $N_{trans}$ is transformer turn ratio; $V_{in}$ is input DC voltage 10 to the primary converter 151 at the DC primary terminals; $V_{out}$ is the output DC voltage of the secondary converter 251 at the load 210; $f_{PWM}$ is the modulation frequency or switching frequency of the switches; and $L_{Xser}$ is the transformer inductance modeled as a model inductance in series with a primary winding of the transformer for phase X. The output power $P_{out}$ may also be referred to as the power transfer capability between the primary converter 151 and the secondary converter 251 which must flow through the transformers.

Furthermore, $\varnothing$ is the phase-shift angle (e.g., phase offset) of the switch control signals (at gates or bases) between the primary side converter 151 (e.g., gates or bases of switches 15-1 and 16-1) and the secondary side converter 251 (e.g., gates or bases of switches 315-1 and 316-1). The controller 48 is configured to determine the maximum power transfer Pmax and vice-versa as:

$$P_{max} = \frac{7nV_{in}V_{out}}{36f_{PWM}L_{Xser}} \qquad (3)$$

It should be understood that constants other than 36 and 7 may be derived empirically based on other system designs.

As indicated in Equation 3, $P_{max}$ is inversely proportional to product (Lxser x $f_{PWM}$), which is the product of the inductance $L_{Xser}$ for a given phase of the primary converter 151 and the frequency of the pulse width modulation signal $f_{PWM}$ outputted by the driver to switches (e.g., 15-1 and 16-1, inclusive), as controlled or triggered by the data ports of the controller 48.

It is possible that $P_{max}$ condition could be reached while increasing the PWM frequency in search of $P_{Loss}$ minima point (e.g., local minima, global minima, or both) in any of the load-dependent family of curves illustrated in FIG. 5A, where each curve can represent the $P_{Loss}$ associated with a corresponding different percentage of full load (e.g., at the DC terminals, such as V2, or DC bus of the secondary converter when operating in first directional mode and at the DC terminals, such as V1, or DC bus of the primary converter when operating in a second directional mode as a bi-directional DC-DC converter).

If such a $P_{max}$ condition occurs and load demand no longer could be met, then the controller 48 drives the inductors $L_{Xser}$ (117, 217, 317) in saturation mode by adding the saturation current $i_{Xsat}$.

Saturation of the series inductors will elevate the value of $P_{max}$. This is because the product $L_{Xser}$ x $f_{PWM}$ will go-down low-enough so that the DC-DC converter no-longer violates a condition of the maximum power transfer from primary to secondary windings of the transformer, or from secondary to primary windings of the transformer, whatever case may be in this bi-directional power converter.

For example, the controller 48, alone or together with the drivers 44, can generate suitable switching functions (e.g., PWM frequency and duty cycle) to drive the switches (e.g., 15-1 - 16-1, inclusive; 315-1 - 316-1, inclusive with a phase offset with respect to 15-1 - 16-1, inclusive; or 315-1 - 316-1, inclusive) such that $L_{Xser}$ and the transformer operates in the saturation region.

In an alternate embodiment, the controller can operate $L_{Xser}$ and the transformer in saturation region by voltage-controlled current source that can be coupled to the primary AC output terminals (A, B, C) to inject a controlled current ($I_{Asat}$, $I_{Bsat}$, $I_{Csat}$) through series inductors ($L_{Aser}$, $L_{Bser}$, $L_{Cser}$), or such voltage-controlled current source may comprise the model that allows the electronic data processor, alone or together with a driver, to generate suitable switching functions to drive the switches (15-1, 16-1, 315-1, 316-1, inclusive) such that $L_{Xser}$ and the transformer operates in the saturation region.

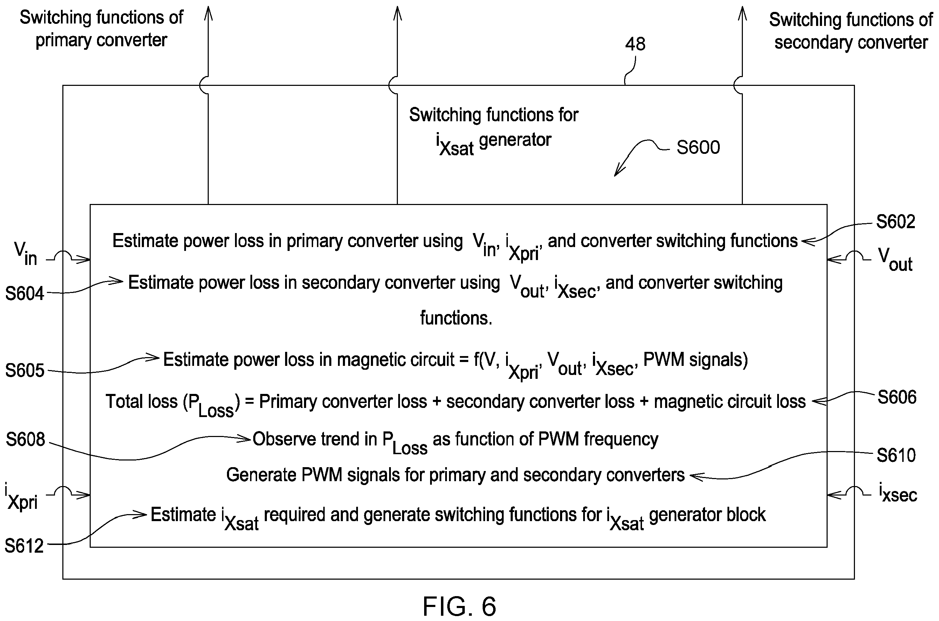

FIG. 6 illustrates a block diagram of a power loss reduction control logic for a DC-DC converter to output switching controls signal at a target modulation frequency for a primary converter, a secondary converter and a variable inductor according to one or more example embodiments.

More specifically, observed current and voltage signals are obtained by the controller on a per phase basis (A, B, C, a, b and c), but PWM signals with a desired duty are at the converter level for switches in the primary and secondary converters. More specifically, the same PWM carrier waveform is used for the primary phases A, B and C. The PWM carrier waveform for the secondary phases a, b and c is phase-shifted with respect to the PWM carrier waveform used for the primary phases A, B and C.

Each semiconductor switch (15-1, 16-1, 315-1, 316-1, inclusive) in the converter will have its own duty cycle such that the converter output voltages and currents are balanced resulting in cancellation of a DC offset in current and a neutral point voltage below a threshold value.

FIG. 6 is a block diagram of the control logic for the converter to output switching control signals at target modulation frequency for a given phase X for the primary converter 151, the secondary converter 251 and the variable inductor based on observations/measurements of the input voltage Vin, the output voltage $V_{out}$, primary current $i_{Xpri}$ and secondary current $i_{xsec}$. The currents $i_{Xpri}$ and $i_{xsec}$ can represent root-mean-squared (RMS) current. The current and voltages referenced in the steps of FIG. 6 are defined consistent with FIG. 3, for example. In accordance with one embodiment of the control logic of FIG. 6, the controller 48 estimates energy losses in various components of the DC/DC converter then controller 48 searches for family of load-dependent power-loss curves to select an applicable load-dependent power loss curve.

In step S602, the controller 48 estimates power loss in the primary converter 151. For example, the controller 48 estimates power loss in the primary converter 151 by using the (DC) input voltage $V_{in}$ at the input terminals of the primary converter 151 and the primary output alternating current (AC) $i_{Xpri}$ at the output terminals of the primary converter 151 for a given phase X, and converter switching functions of the primary converter 151 in conjunction with one or more voltage sensors or current sensors associated with the primary converter 151. In addition to or alternatively, the controller 48 may estimate the DC input current $i_{in}$ using measurements/observations of the primary current $i_{Xpri}$ at the input of the primary winding for the associated phase.

In step S604, the controller 48 estimates power loss in the secondary converter 251 using the switching functions and sensed (observed) secondary DC output voltage $V_{out}$ at the output terminals of secondary converter 251 and the AC input current $i_{xsec}$ at the input terminals of the secondary converter 251.

In step S605, the controller 48 estimates power loss in the magnetic circuit, where the magnetic circuit power loss is a function of one or more of the following: (a) the DC input voltage $V_{in}$ at the input terminals of the primary converter 151, (b) the AC current flowing $i_{Xpri}$ in the primary winding of the transformer at the output of the primary converter 151 for a given phase X, (c) the DC output voltage $V_{out}$ at the output terminals of the secondary converter 251, (d) the AC current flowing $i_{xsec}$ in the secondary winding of the transformer at the input of the secondary converter 251 for a given phase x, and (e) the modulation signal, such as the modulation frequency, phase offset and synchronization of the pulse width modulation signals, applied to the switches of the primary converter 151 and the secondary converter 251.

In one embodiment, the magnetic circuit comprises an electromagnetic circuit of the transformer, alone or together with a variable inductor in series with the primary winding of the transformer. The magnetic circuit can be modeled at alternating current frequencies, for instance. Further, the modulation signal can be structured as soft switching events, by controlling proper sequence and synchronization of the control signals applied to the switches of the converter, to reduce switching or power loss.

In step S606, the controller 48 estimates the total loss $P_{Loss}$ based on a first power loss associated with the primary converter 151, a second power loss associated with the secondary converter 251 and a magnetic circuit loss (associated with the transformer, alone or together with the variable inductor). In general, power loss is estimated as a function of first power loss of the primary converter 151, a second power loss of secondary converter 251, and a third power loss of the transformer and an associated variable inductor in series with a primary winding of the transformer for a given phase, which can be used to estimate the required capacity or size of the transformer.

Accordingly, total power loss $P_{Loss}$ can be estimated by the controller 48 in accordance with the following equation:

$$ P_{Loss} = L_{PC} + L_{SC} + L_M \qquad , $$

where $L_{PC}$ is power loss associated with the primary converter 151, $L_{SC}$ is power loss associated with the secondary converter 251, and $L_M$ is power loss associated with the magnetic circuit.

In step S608, the electronic controller 48 records a series of observations of the estimated total power loss as a function of modulation frequency to establish one or more power loss curves or power loss data sets such as those shown in FIG. 5A. For example, the controller 48 may observe trends (e.g., minimization of power loss) in the estimated total power loss as a function of modulation frequency (e.g., pulse width modulation frequency). In one example, the processor 42 may use a least squares search method to identify the minimum or minima associated with the estimated total power loss as a function of modulation frequency.

In one configuration, once the controller 48 estimates or observes the observed output load or commanded output load, the controller 48 attempts to find or lock-in one of the reference load curves (e.g., of $P_{Loss}$ versus $f_{PWM}$ shown in FIG. 5A) based on observed or commanded ratio or percentage of output load for a corresponding time interval.

Then, the controller 48 scans or sweeps the PWM frequency for the frequency range of this curve until the controller 48 identifies or determines a minimum loss point or minimum loss range on the load curve. For example, for 50% load curve, the controller 48 will sweep PWM frequency to get to minimum loss point on the 50% load curve, which can be designated as $P_{Loss\_min\_50\% Load}$ operating point. Then, the controller 48 operates or continues to operate the primary converter 151 and the secondary converter 251 at the PWM modulation frequency $f_{PWM}$ or range associated with the corresponding identified operating point that minimizes power loss for the DC-DC converter, until the observed or commanded load (e.g., load percentage) is changed.

For example, as load demand changes illustratively from 50% to 100%, the controller 48 will search for a 100% load curve and then search or hunt for the $P_{Loss\_min\_100\% Load}$ operating point that minimizes power loss of the converter consistent with the applicable load curve. Accordingly, the controller 48 may update the modulation frequency associated with the corresponding new or next operating point that minimizes power loss for the converter (e.g., based on the applicable 100% load curve or next applicable load curve.)

In step S610, the controller 48 generates modulation signals at the target frequency $f_{PWM}$ or target frequency range associated with a corresponding minimum or minimized total power loss in accordance with step S608 and the duty cycles for each phase X of the primary converter and each phase x of the secondary converter.

In step S612, the electronic controller 48 estimates the inductor saturation current $i_{Xsat}$ using the curve of FIG. 5B (and/or a polynomial function tracing the curve of FIG. 5B) and generates the switching functions that control setting or adjustment of an inductance value of the variable inductor. For example, the controller 48 estimates the inductor saturation current required in a primary winding and variable inductance in series with the primary winding, and a set of switches can create a parallel or series network of switched inductances that can be inserted or removed from the variable inductor to adjust, establish or set its corresponding inductance value, dynamically or regularly over time intervals.

In one embodiment the controller 48 could train a machine learning model or other artificial intelligence model stored in the data storage device based on any of the following parameters: current measurements of the converters 151 and 251, voltage measurements of the converters 151 and 251, estimated current or voltages, variable primary inductances, and modulation frequencies or modulation frequency ranges, and/or Equations 1-3, inclusive, to bring-in intelligence required to self-characterize vital components of DAB-based DC-DC converter. The electronic data processor that trains a machine learning model or other artificial intelligence model facilitates control of the switching functions of DC-DC converter, should parameters of series inductors and isolation transformer deviate from expected design values. Therefore, the control method and system, which is based on power-loss minimization technique, alone or together with machine learning model or artificial intelligence model, is capable to adopt itself to offer optimum performance should systems parameters deviate from design values.

Power Difference Reduction

In accordance with example embodiments, the electronic data controller 48 searches for a suitable family of load-dependent power differences curves based on sets of candidate load-dependent power difference curves and selects load curve data from the family of load-dependent power difference curves. Sets of load-dependent power difference curves can be stored in a data storage device, as look-up tables 49, equations (e.g., polynomial equations), graphs, charts or in any other suitable data structure or format.

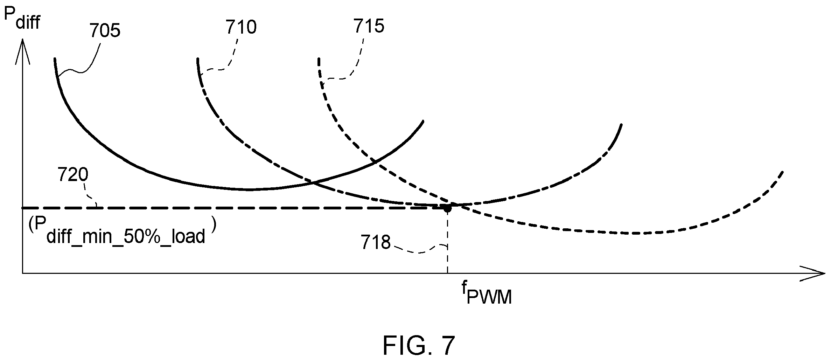

FIG. 7 illustrates a graph of converter power difference versus modulation frequency, along with associated load curves at different load percentages or ratios.

FIG. 7 illustrates example sets of candidate load-dependent power difference curves. There may be thousands of candidate load-dependent power difference versus modulation frequency (e.g., PWM frequency) curves, however, for clarity only three curves are illustrated in FIG. 7. FIG. 7 illustrates a power difference curve 705 at 100% load, a power difference curve 710 at 50% load and a power difference curve 715 at 10% load.

Depending upon output load, the controller 48 selects a potential optimum curve or potential preferential curve of the power difference $P_{diff}$ versus PWM frequency $f_{PWM}$ depicted in FIG. 7. Then, the controller 48 sweeps modulation frequency or frequency range (e.g., PWM frequency or PWM frequency range) on this curve until a minimum loss point on the curve is identified/determined (e.g., where the minimum loss point represents both a local minimum for the present selected family of curves and the global minima for all previously analyzed families of curves for any sampling period.) For example, for 50% load curve, the DAB control will sweep PWM frequency to get to minimum power difference point 720 on the 50% load curve 715 and determine the corresponding PWM frequency 718. Then converter continues to operate at this point by using the identified PWM frequency 718 until load is changed. For example, as load demand changes from 50% to 100%, system controller will search for the 100% load curve and then determine the PWM frequency at the minimum operating power difference point for the 100% load curve 705.

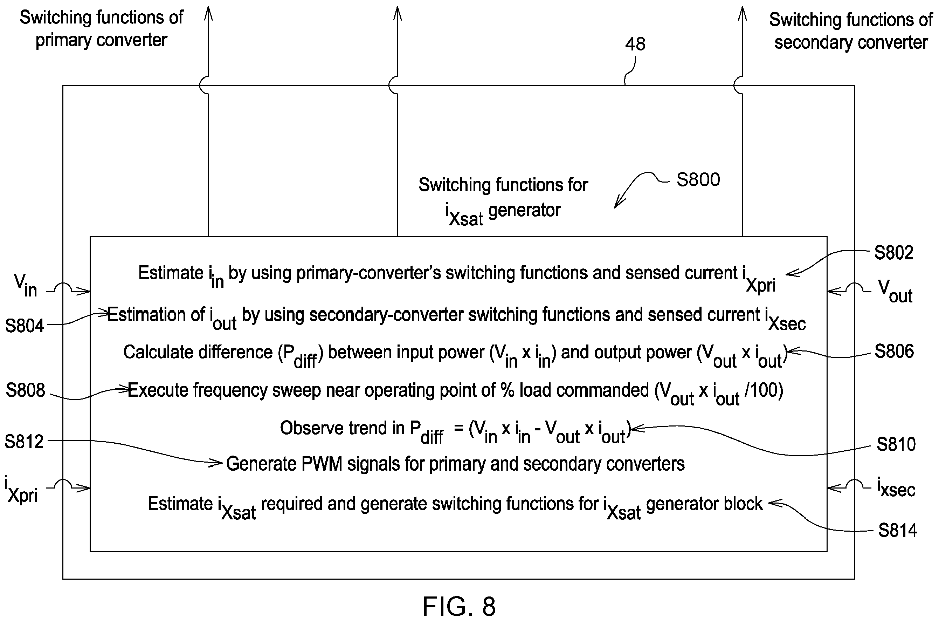

FIG. 8 is a block diagram of the control logic of power difference minimization for the converter to output switching control signals at target modulation frequency for the primary converter 151, the secondary converter 251 and the variable inductor based on observations/measurements of inverter input voltage, inverter output voltage, primary current and secondary current for a given phase. The current and voltages referenced in the steps of FIG. 8 are defined consistent with FIG. 3, for example.

In step S802, the controller 48 estimates DC input current $i_{in}$ at the input terminals of the primary converter 151. For example, under a first procedure the controller 48 estimates DC input current $i_{in}$ at the primary converter 151 by controlling the primary converter's switching functions and making simultaneous observations or measurements from one or more sensors (e.g., voltage sensor, current sensor, or other sensor circuitry). Separately or cumulatively with the first procedure, under a second procedure, the controller 48 estimates the DC input current $i_{in}$ to the primary converter 151 by observations or measurements of the alternating current primary current $i_{Xpri}$ at the input of the primary winding of the transformer by a current sensor for a given phase X.

In step S802, the controller 48 estimates the converter output DC current $i_{out}$ at the output terminals of the secondary converter 251 by using secondary converter's switching functions and sensed (observed) secondary current $i_{xsec}$. For example, under a first technique the controller 48 estimates AC input current $i_{xsec}$ to the secondary converter 251 by controlling the secondary converter's switching functions and making simultaneous observations or measurements from one or more sensors (e.g., a current sensor, voltage sensor or other sensor circuitry) in or associated with the secondary converter 251. Separately or cumulatively with the first technique, under a second technique, the controller 48 estimates, the direct current output current $i_{out}$ from the secondary converter 251 by observations or measurements of one or more sensors (voltage sensors) by aiding, augmentation, or verification the estimation of the direct current secondary current $i_{xsec}$.

In step S806, the controller 48 calculates a power difference $P_{diff}$ between input power and output power, where the input power Pin and the output power Pout are defined in accordance with the following equations, respectively:

$$P_{in} = V_{in} \times i_{in}$$

$$P_{out} = V_{out} \times \dot{i}_{out}$$

In step S808, the controller 48 executes a frequency sweep of a modulation frequency within a target range or target bandwidth near the operating point of the applicable load curve data (e.g., load curve) associated with the commanded percent load or percent load observed. The commanded percent load or percent load observed can be derived from a ratio of observed output power or commanded output power to maximum output power, where observed or commanded output power is determined by the controller 48 in accordance with the following equation.

$$P_{out} = V_{out} \times I_{out}$$

where $V_{out}$ is an observed or commanded output voltage at the secondary converter 251 output and where $i_{out}$ is an observed or commanded output voltage at the secondary converter 251 output.

At step S810, the controller 48 observes the trend in power loss difference based on or consistent with the power loss difference in accordance with the following equation:

$$P_{diff} = (V_{in} \times i_{in}) - (V_{out} \times i_{out})$$

For example, in step S808, during the frequency sweep the controller 48 : (a) selects or identifies (an observed or estimated) preferential minimum power loss or minimum power loss difference associated with the applicable load curve data (e.g., among a set of candidate minimum power losses); and (b) selects or determines a modulation frequency ($f_{PWM}$) associated with the corresponding preferential minimum power loss or preferential minimum power loss difference.

In accordance with one embodiment, the performance of the converter (e.g., Dual-Active-Bridge (DAB), DC-DC converter) can be optimized by selecting or determining a pulse-width-modulation (PWM) frequency that corresponds to a maximum efficiency at that operating point for a time interval. The controller 48 may need to update the modulation on a regular basis, such as at each time interval to maintain, select or determine the maximum efficiency if converter input voltage varies, if converter output voltage varies, or if output power varies (e.g., in conjunction with percent load or percent commanded load) because of transient load conditions (e.g., of an active load or passive load). For example, at each interval, the controller 48 can select a new updated modulation frequency if the output power varies from a first percentage output load (e.g., 10%) to a second percentage output load (e.g., 100%), or vice versa to provide efficient thermal management consistent with applicable load curve data for the converter.

The method of FIG. 8 supports a controller 48 updating an operating point on regular basis (e.g., dynamically at each interval) to optimize the control method for maximum possible efficiency, while losing minimal possible energy, which facilitates enhanced thermal management.

For the power difference method, the controller 48 estimates the power at input of primary converter 151 ($P_{in}$) and power at output of secondary converter 251 ($P_{out}$). Then, the difference between Pin and $P_{out}$ is calculated, where the difference is denoted as $P_{diff}$.

To estimate Pin, power signals $V_{in}$ (measured) and $i_{in}$ (estimated) are used by the controller 48. To estimate $i_{in}$, one or more sensors are coupled to data ports via analog-to-digital converters and sample-and-hold modules (e.g., flip-flops). Further, to estimate $i_{in}$: (a) the sensors are configured to measure primary converter output currents ($i_{Apri}$, $i_{Bpri}$ and $i_{Cpri}$); (b) the electronic data processor is configured to use PWM signals of primary converter along with $i_{Apri}$, $i_{Bpri}$ and $i_{Cpri}$ to estimate quantity $i_{in\_unfiltered}$; (c) the estimated quantity, $i_{in\_unfiltered}$, is applied to an input of a low-pass filter, which results in the primary converter input current, $i_{in}$, at the output of the low-pass filter. Alternatively, $i_{in}$ can be measured (directly) using low-bandwidth or direct current (DC) current sensor.

Similarly, to estimate $P_{out}$, quantities $V_{out}$ (measured) and $i_{out}$ (estimated) are used by the controller 48. To estimate $i_{out}$, one or more sensors are coupled to data ports via analog-to-digital converters and sample-and-hold modules (e.g., flip-flops). Further, to estimate $i_{out}$: (a) the sensors are configured to measure secondary converter input currents ($i_{asec}$, $i_{bsec}$ and $i_{csec}$) are measured; (b) the electronic data processor is configured to use PWM signals of secondary converter along with $i_{asec}$, $i_{bsec}$ and $i_{csec}$ to estimate quantity $i_{out\_unfiltered}$; and (c) the estimate quantity $i_{out\,unfiltered}$ is applied to the input of a low-pass filter, which results in the load current, $i_{out}$ at the output of the low-pass filter. Alternatively, $i_{out}$ can be measured (directly) using low-bandwidth or DC current sensor.

At S810, the power difference $P_{diff}$ is observed while sweeping PWM switching frequency on a load-dependent curve. Once a $P_{diff\_min}$ operating point is identified on a load-dependent curve, the controller 48 keeps operating at a self-tuned PWM frequency or a self-tuned modulation frequency until the load changes during a later or next sampling interval associated with the above current measurements and corresponding estimated currents.

In step S812, the controller 48 generates the selected or determined modulation frequency to control the primary converter 151 and the secondary converter 251. For example, the controller 48 generates control signals or synchronized control signals to control the activation and deactivation of switches in the primary converter 151 and the secondary converter 251. In one example, the control signals are applied to the control terminal of the semiconductor switch, such as gate terminal or a base terminal of a transistor.

In step S812, the data processor 42 or data controller 48 estimates the inductor saturation current $i_{Xsat}$ required and generates control signals or switching signals for one or more switches (associated with a network of inductors that can be switched in or out of a circuit) to select a target inductance level associated with a corresponding variable inductor current.

Referring to FIG. 3, the inductor saturation current $i_{Xsat}$ corresponds to alternating current that flows through the variable inductor and the primary winding of the transformer for a given phase X (i.e., $i_{Asat}$, $i_{Bsat}$, $i_{Csat}$), which is consistent with the selected modulation frequency (e.g., and operational point on the associated load curve data). Accordingly, the data controller 48 is well suited to select or determine a modulation frequency and the variable inductance to minimize the power loss associated with the primary converter 151, the secondary converter 251, or both; hence, reduce the heat dissipation/cooling requirements for the entire converter.

In one embodiment, the controller 48 determines transformer parameters, variable inductance values, or both using sense voltage $V_{in}$, PWM switching functions, and signature of $i_{Xpri}$. To train or calibrate the controller 48, at each initialization or start-up of the converter, short duration known PWM waveforms will be produced for power signals, $V_{Xpri}$ and $V_{Xsec}$ in sequence and then signatures of $i_{Xpri}$ and $i_{xsec}$ will be observed to determine transformer parameters. The above training scheme for the controller 48 learns converter behavior. By learning converter behavior, it will be possible to track system related parameter changes over time, such as if the electronic components or circuit board of the converter or system changes over time, which could trigger predictive maintenance of the converter. This is kind of application of machine learning (ML) technique in prognostics and diagnostics of the DC/DC converter that could support objective of predictive maintenance.

Phase Current Balancing

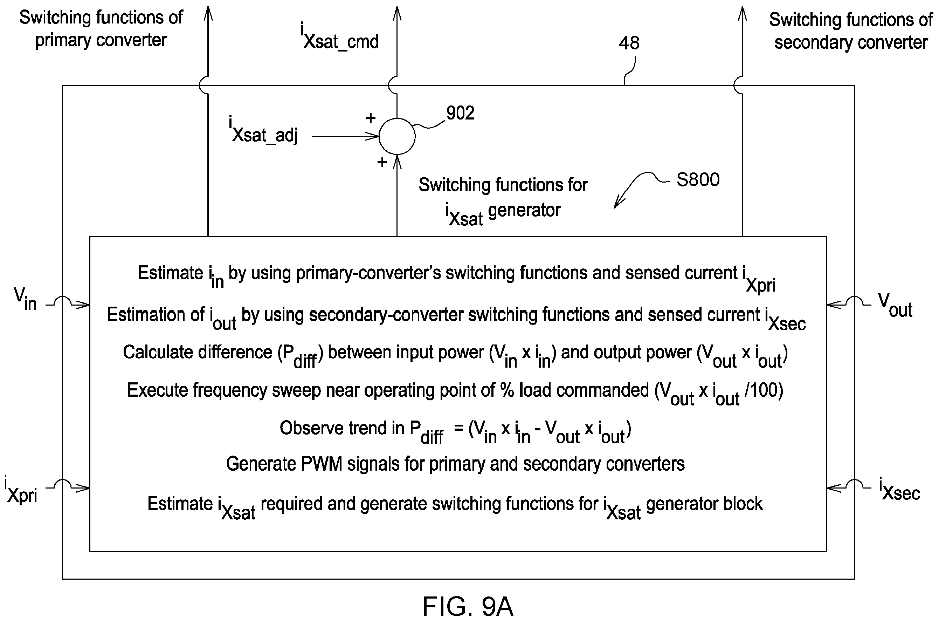

FIG. 9A illustrates a block diagram of a power difference reduction control logic with phase current balancing for a DC-DC converter to output switching controls signal at a target modulation frequency or target modulation frequencies for a primary converter, a secondary converter and a variable inductor according to one or more example embodiments.

The control logic of FIG. 9A is similar to the control logic of FIG. 8. For the sake of brevity, only the differences will be described.

As shown in FIG. 9A, the control logic further includes a saturation adjustment 902 after the switching functions for the saturation current $i_{Xsat}$ is generated at S814.

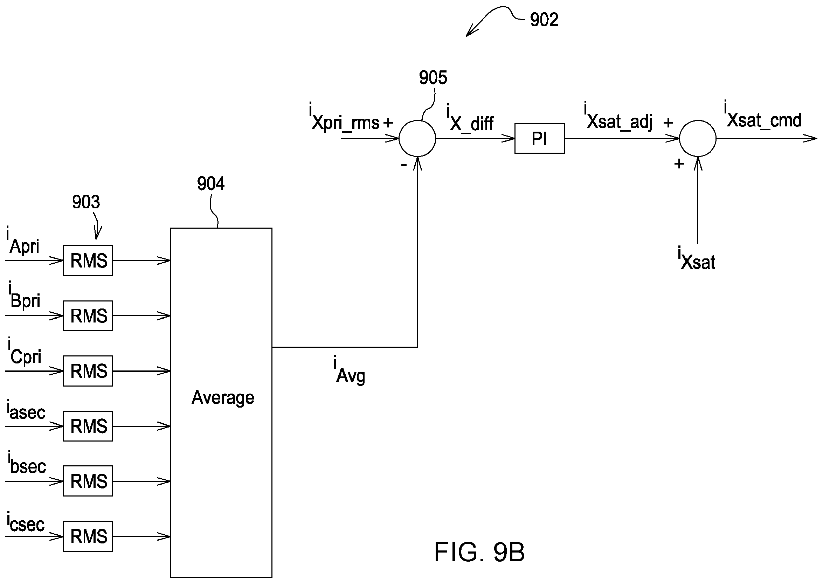

FIG. 9B illustrates an example embodiment of the saturation adjustment 902. The saturation adjustment 902 may be implemented by the controller 48 and, in some embodiments, the processor 42.

For an isolation transformer (e.g., 114, 214, 314) or the inductors (117, 217, 317) used in the converter circuit, the leakage inductance error in or between any of two of the three phases could be higher than approximately ten percent (10%) because of the inductor manufacturing tolerance. The leakage inductance error may cause unbalanced phase currents and cause the transformer saturation.

The saturation adjustment 902 addresses the potential unbalanced inductance using a voltage-controlled current source (e.g., coupled to the primary AC terminals) to drive controlled current through series inductors to balance the inductance of the three-phase inductors.

More specifically, as shown in FIG. 9B, the controller 48 determines an RMS current for each phase current $i_{Apri}$, $i_{Bpri}$, $i_{Cpri}$, $i_{asec}$, $i_{bsec}$ and $i_{csec}$ using RMS sensors 903.

It should be understood that the same PWM carrier waveform is used for the primary phases A, B and C. The PWM carrier waveform for the secondary phases a, b and c is phase-shifted with respect to the PWM carrier waveform used for the primary phases A, B and C.

At 904, controller 48 determines an average current $i_{Avg}$ of the RMS phase currents. In one embodiment, the controller 48 may determine an average for a particular phase when the saturation command is for that particular phase. For example, the controller 48 may determine an average of $i_{Apri}$ over a period of time and use the average when the saturation command to be determined is for phase A. In another embodiment, the controller 48 may determine an average of all three primary currents $i_{Apri}$, $i_{Bpri}$, $i_{Cpri}$ when the saturation command to be determined is for any primary phase current and may determine an average of all three second currents $i_{asec}$, $i_{bsec}$ and $i_{csec}$ when the saturation command to be determined is for any secondary phase current. In another embodiment, the controller may determine an average of all six phase currents to uses as the average current $i_{Avg}$.

For each phase X, the controller 48 determines a current difference $i_{X\_diff}$ between the RMS current $i_{X\_rms}$ and the average current $i_{Avg}$ at 906. The controller 407 then applies a PI control at 907 to generate a saturated current adjustment $i_{Xsat\_adj}$ for the inductor of the phase X (e.g., inductor 117 for phase A, inductor 217 for phase B and inductor 317 for phase C).

The controller 48 then adds the saturated current adjustment $i_{Xsat\_adj}$ to the determined saturated current $i_{Xsat}$ from S814 to generate the commanded saturated current for the inductor $i_{Xsat\_cmd}$ of the given phase X.

Thus, each inductance (e.g., each primary inductance 117, 217, 317) of the three-phase inductors can be adjusted by tuning the voltage-controlled current sources for each AC phase (e.g., AC primary phase) of each converter during the hardware calibration routine or during the run-time by monitoring the three-phase root-mean squared (RMS) phase currents.

In a single-phase DAB (dual active bridge) there is only one inductor, hence there is no phase to phase to variation issue due to inductor used in dual active bridge.

By contrast, in a three-phase DAB (dual active bridge) there are three inductors, one for each phase A, B-b and C, hence within the DAB, there will be phase to phase to variation in inductor, hence, the control method of FIG. 9B is used to reduce unbalanced cases of different values of inductors.

DC Current Offset Reduction

DC current offset can be caused by propagation delays (e.g., circuit board trace differences or other hardware tolerance differences) of control signals realized at the control terminals of the switches (15-1 - 16-1, inclusive for the primary converter, or 315-1 - 316-1, inclusive, for the secondary converter) and unmatched deadtime for respective pairs of low-side switches (15-1, 315-1) and high-side switches (16-1, 316-1) of the same converter control can make the transformer vulnerable to saturation. Uncontrolled transformer saturation increases the risk of a large unwanted current flow through the three phases of the DC-DC converter, which can contribute to or cause hardware damage. DC current offset can also be caused by phase-to-phase variability in the isolation transformer 114, 214, and 314 and their associated series inductors 113, 213, and 313. However, DC current offset may have a similar effect or impact if the DC current offset was caused by the above stated propagation delays.

One or more example embodiments reduces or compensates for transformer saturation by reducing the DC current offset by introducing a compensating PWM duty offset to the PWM control or control signals applied to the control terminals (e.g., gates or base terminals) of the switches. Further, the controller may adjust the PWM duty for the high-side switch or the low-side switch, separately to intentionally inject a compensating DC current offset to reduce the existing DC current offset.

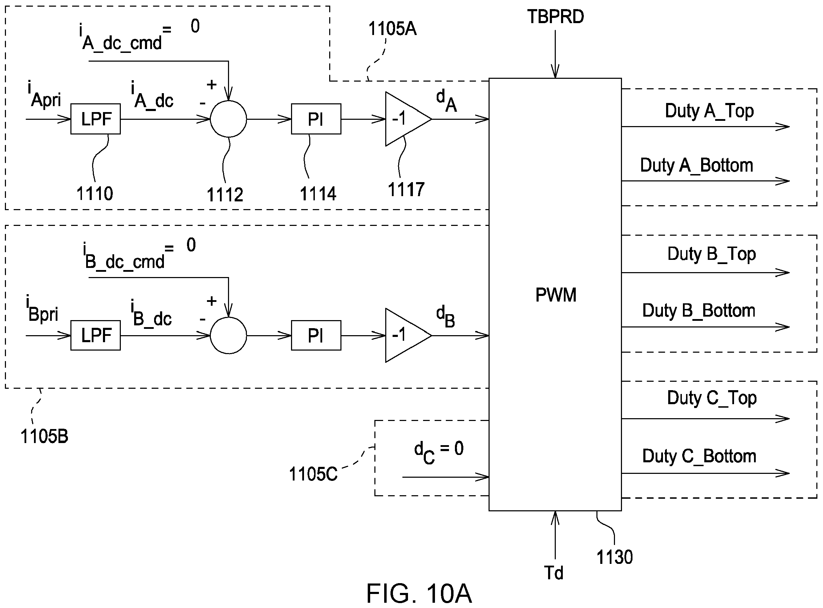

FIGS. 10A-10B illustrate block diagrams of control logic for generating PWM signals for reducing a DC current offset according to one or more example embodiments. The control logic may be implemented by the controller 48 and, in some embodiments, the processor 42, specifically.

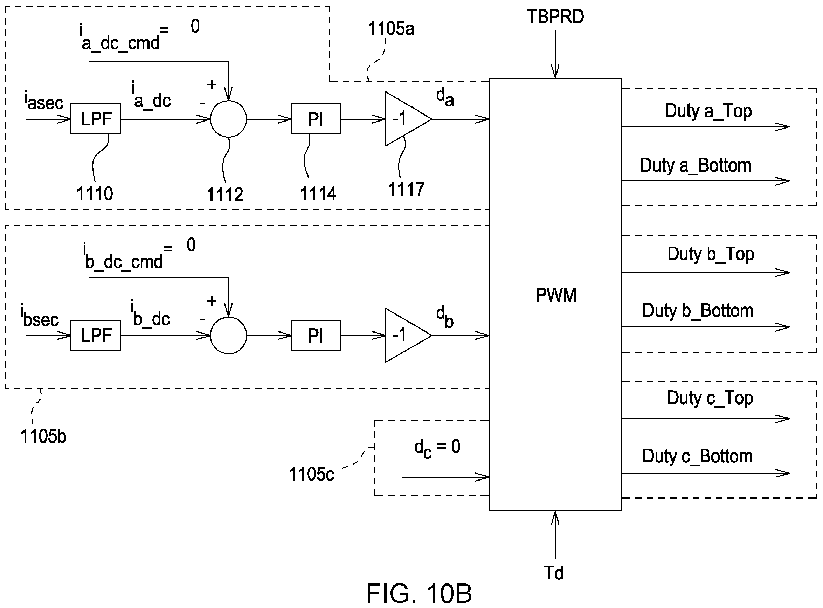

FIG. 10A shows the PWM duty adjustment method for DC current offset reduction for the primary phase currents $i_{Apri}$, $i_{Bpri}$ and $i_{Cpri}$. FIG. 10B shows the PWM duty adjustment method for DC current offset reduction for the secondary phase currents $i_{asec}$, $i_{bsec}$ and $i_{csec}$. The control logic has processing chains for each primary (1105A, 1105B, 1105C) and secondary phase (1105a, 1105b, 1105c). Since the processing flow shown in FIG. 10A is the same as that shown in FIG. 10B with the exception of FIG. 10B being applicable to the secondary currents instead of the primary currents, only a description of FIG. 10A will be provided for the sake of brevity.

FIG. 10A illustrates processing chains 1105A, 1105B and 1105C for each primary phase current.

The processing chains 1105A and 1105B for phases A, B are the same. Thus, for the sake of brevity, the generation of the PWM signal for phase A will be described.

The controller applies a low-pass filter (LPF) 1110 to the phase current $i_A$ to extract the DC current component $i_{A\_dc}$. The controller 48 determines a difference between a DC offset command for phase A $i_{A\_dc\_cmd}$ and the DC current component $i_{A\_dc}$ at subtractor 1112. In the embodiment shown in FIG. 10A, the DC current offset command for phase A $i_{A\_dc\_cmd}$ is set to 0. However, example embodiments are not limited thereto.

A proportional integral (PI) controller 1114 is utilized to control the DC current offset to 0 by adjusting the PWM duty cycles using the duty offset variable $d_A$. The output of the PI 1114 is negated at 1117 to produce the duty offset variable $d_A$. The duty offset variable $d_A$ may be continuously adjusted by the controller 48 as the DC current offset moves to zero. As shown, the control logic of FIG. 10A is an open loop operation to correct DC offset. The controller 48 negates the output of the PI 1114 to obtain a complimentary duty. For example, if the PI 1114 produces an output of 40%, then the output at 1117 is 60%.

Because the system is a three-phase balance system, an effective compensating duty adjustment is only required to be applied to two phases. The duty offset for the third phase C/c is set to 0.

The controller 48 produces duty cycles for both the top portions and bottom portions of each phase (e.g., Duty A_Top and Duty A_Bottom for phase A, Duty B_Top and Duty B_Bottom for phase B, Duty C_Top and Duty C_Bottom for phase C) using a Time Base Period (TBPRD), a dead time Td and the respective duty offset variable $d_A$, $d_B$, dc. Using phase A as an example, a PWM generator 1130 of the controller 48 generates the top duty signal for switch 16-1 (Duty A_Top) and the bottom duty signal for switch 15-1 (Duty A_Bottom) based on the duty offset variable $d_A$, TBPRD and Td.

The TBPRD is the inverse of the switching frequency of a designated operating point (based on $P_{Loss}$ as described above in FIG. 5A or $P_{diff}$ described in FIG. 7). In some embodiments, the dead time Td may be constant (e.g., 175 ms). In other embodiments, the dead time Td may be a function of the load, TBPRD and temperature of the converter.

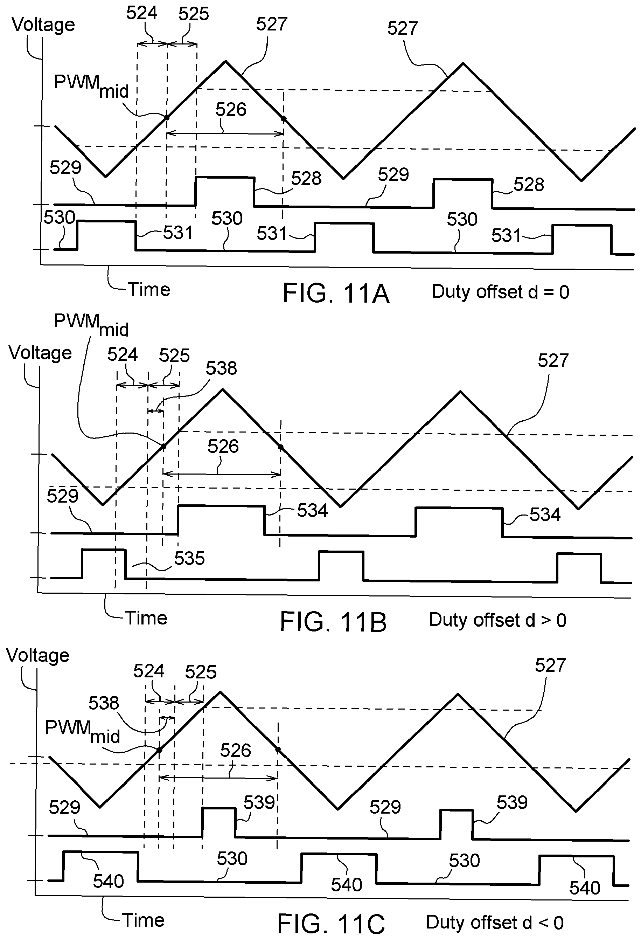

FIGS. 11A-11C illustrates timing diagrams of the application of the duty offset d and how the controller determines the duty cycle for each phase. FIG. 11A illustrates an instance where the duty offset d is zero, FIG. 11B illustrates an instance where the duty offset d is greater than zero and FIG. 11C illustrates an instance where the duty offset d is less than zero. The vertical axis in FIGS. 11A-11C represents voltage per unit (e.g., one unit standard signal) and the horizontal axis is time in micro- or nano- seconds.

As shown in FIG. 11A, the controller generates a triangular PWM carrier signal 527, which causes the controller to generate a logic low signal 529 and a logic high signal 528 for the top switch duty signal and a logic low signal 530 and a logic high signal 531 for the bottom switch duty signal. Time periods 524 and 525 both of length Td/2 and length of time 526 corresponds to a 50% duty. The controller 48 generates the logic high signals 528 and 531 such that the actual duty of the logic high signals 528 and 531 corresponds to .5 - Td/TBPRD.

As shown in FIGS. 11A, because the duty offset d is zero, the logic high signal 528 and the logic high signal 531 are symmetrical with respect to the midpoint of the PWM carrier wave $PWM_{mid}$.

As shown in FIG. 11B, when the duty offset d for a particular phase current ($d_A$, $d_B$, dc, $d_a$, $d_b$, or $d_c$) is greater than zero, the controller generates the triangular PWM carrier signal 527, which causes a logic high signal 534 for the top switch duty signal and a logic high signal 535 for the bottom switch duty signal. Length of time 538 is d/2. The controller 48 generates the logic high signal 534 such that the actual duty of the logic high signal 534 corresponds to .5 + (d-Td)/TBPRD. The controller 48 generates the logic high signal 535 such that the actual duty of the logic high signal 535 corresponds to .5 - (d+Td)/TBPRD.

As shown in FIG. 11B, the use of the duty offset d by the controller 48 causes the logic high signal 534 and the logic high signal 535 to be offset with respect to the midpoint of the PWM carrier wave $PWM_{mid}$.

As shown in FIG. 11C, when the duty offset d for a particular phase current ($d_A$, $d_B$, dc, $d_a$, $d_b$, or $d_c$) is less than zero the controller, generates a triangular PWM carrier signal 541, which causes a logic high signal 539 for the top switch duty signal and a logic high signal 540 for the bottom switch duty signal. The controller 48 generates the logic high signal 539 such that the actual duty of the logic high signal 539 corresponds to .5 - (d+Td)/TBPRD. The controller 48 generates the logic high signal 540 actual duty of the logic high signal 540 corresponds to .5 + (d-Td)/TBPRD.

As shown in FIG. 11C, the use of the duty offset d by the controller 48 causes the logic high signal 539 and the logic high signal 540 to be offset with respect to the midpoint of the PWM carrier wave $PWM_{mid}$.

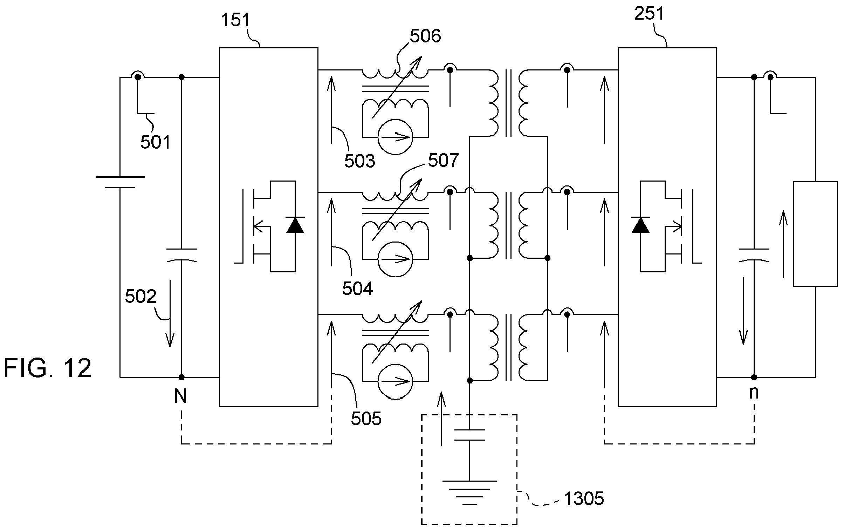

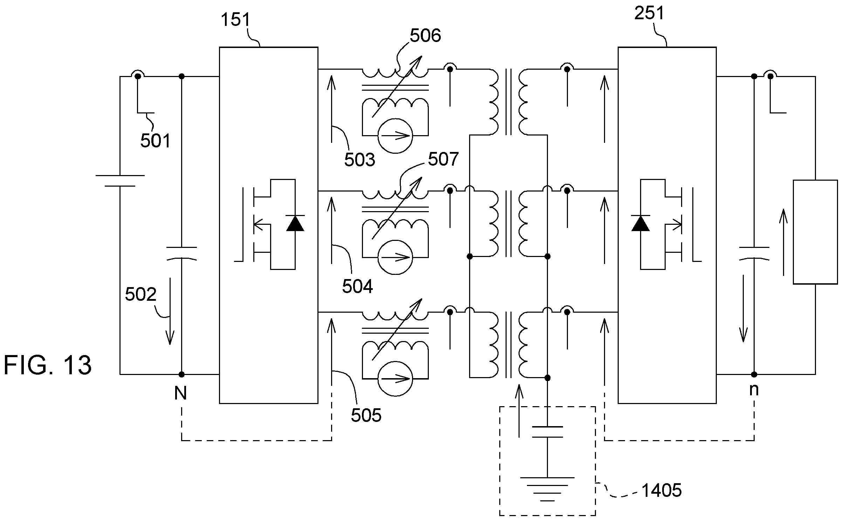

FIG. 12 illustrates a DC-DC converter according to one or more example embodiments. A DC-DC converter 1300 includes neutral point voltage sensing 1305 on the primary side to measure a neutral point voltage $V_{Np}$. The DC-DC converter 1300 is otherwise the same as the DC-DC converter shown in FIG. 3. FIG. 13 illustrates another DC-DC converter according to one or more example embodiments. A DC-DC converter 1400 includes neutral point voltage sensing 1405 on the secondary side to measure a neutral point voltage $V_{ns}$. The DC-DC converter 1400 is otherwise the same as the DC-DC converter shown in FIG. 3.

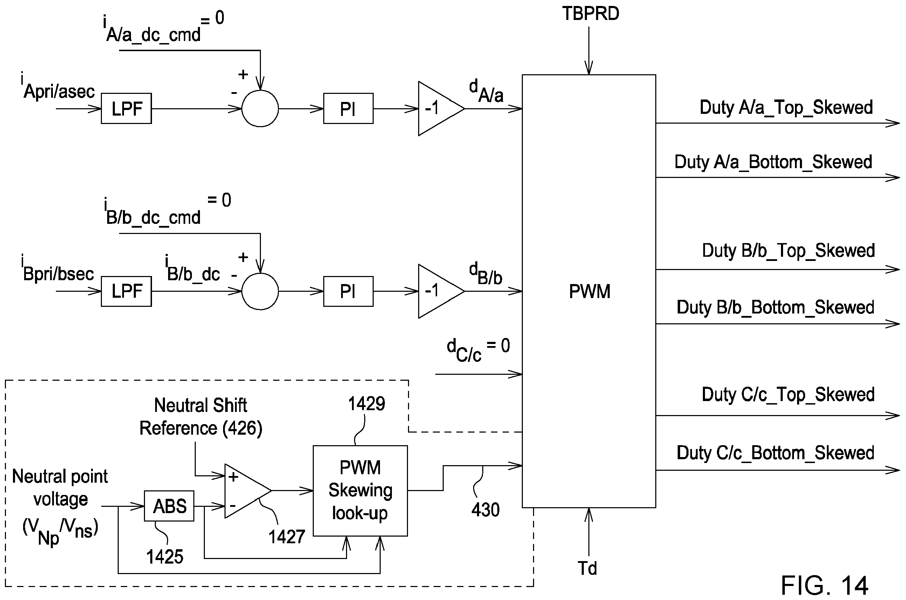

FIG. 14 illustrates a control logic for PWM duty adjustment for DC current offset and neutral point voltage shift correction. The method of FIG. 14 may be used based on the measured neutral point voltage $V_{Np}$ on the primary converter or the measured neutral point voltage $V_{ns}$ on the secondary converter.

As shown in FIG. 14, the controller determines an absolute value of the neutral point voltage $V_{Np}/V_{ns}$ at 1425 and compares the absolute value to a neutral shift reference point at a comparator at 1427.

The neutral shift reference for the primary converter may be determined by the controller 48 using the measured three-phase voltages ($V_{AN}$, $V_{BN}$, $V_{CN}$) with respect to negative DC of primary side converter and then determining the neutral shift reference value as 0.05*SQRT ($V_{AN}$x$V_{AN}$ + $V_{BN}$x$V_{BN}$ + $V_{CN}$x$V_{CN}$).

The output of the comparator is an on/off signal (e.g., 0 or 1), which indicates whether the duty signal for each phase should be skewed (i.e., shifting the midpoint of the duty of the PWM signal) and oscillated (expansion/contraction of the duty of the PWM signal) to increase the duty ratio (e.g., increase the on time) or decrease the duty ratio (e.g., decrease the on time). More specifically, if the top switch duty is expanded then corresponding bottom switch duty (i.e., of the same phase) is contracted (shrunk). Skewing and oscillation is the same for all switches on primary converter. A similar process is used for the secondary converter. Skewing and oscillation of duty of the PWM signal for the primary converter and for the secondary converter are independent from each other.

The controller uses the output of the comparator to look up a skewing amount that corresponds to the output of the comparator 1427, the neutral point voltage $V_{Np}/V_{ns}$ and the absolute value of the neutral point voltage (i.e., the output at 1425) in a lookup table (LUT) 1429. The LUT 1429 stores PWM duty skew and oscillation amounts for each phase current (ia, $i_B$, $i_C$, $i_a$, $i_b$ and $i_c$) that correspond to the neutral point voltage. The output of the comparator 1427 indicates whether those amounts are to be used to increase the duty ratio or decrease the duty ratio.

The controller 48 then shifts and/or increases/decreases the duty cycles for each phase current by the amounts corresponding to the neutral point voltage and the direction indicated by the output of the comparator 1427.

More specifically, once the controller 48 determines the duty cycle using the control described in 10A-11C, the controller 48 applies the shift and/or change in duty ratio in the PWM signals affecting their duty cycles (Duty A_Top, Duty A_Bottom, Duty B_Top, Duty B_Bottom, Duty C_Top, Duty C_Bottom, Duty a_Top, Duty a_Bottom, Duty b_Top, Duty b_Bottom, Duty c_Top, Duty c_Bottom) to generate skewed duty cycles (Duty A_Top_skewed, Duty A_Bottom_skewed, Duty B_Top_skewed, Duty B_Bottom_skewed, Duty C_Top_skewed, Duty C_Bottom_skewed, Duty a_Top_skewed, Duty a_Bottom_skewed, Duty b_Top_skewed, Duty b_Bottom_skewed, Duty c_Top_skewed, Duty c_Bottom_skewed) to reduce and/or cancel out the neutral point voltage.

The LUT 1429 may be generated during a characterization procedure in which neutral point voltages are measured that correspond to various switching frequencies and duty cycles for each primary phase current and secondary phase current. During the characterization procedure, the neutral point voltage is measured and if found above certain value, e.g., 1% compared to peak value of the converter output voltage, then duty is slightly skewed and then the neutral point voltage is again measured to see if it has gone down. Such measurements and duty adjustments lead to the look-up table 1429.

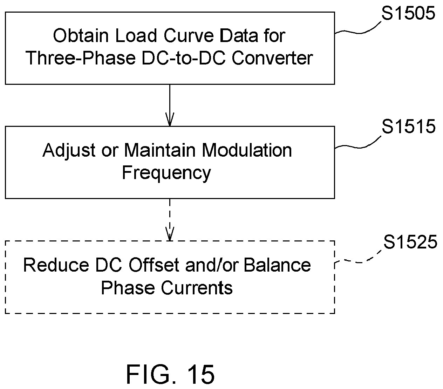

FIG. 15 illustrates a method of reducing energy loss in a three-phase DC-DC converter. The method of FIG. 15 may be performed using the three-phase DC-DC converters described above and the controller may perform and/or cause the DC-DC converter to perform the operations shown in FIG. 15.

At S1505, the controller obtains load curve data for the three-phase DC-DC converter based on an operation load ratio or percentage of the DC-DC converter. In some example embodiments, the load curve data are the power loss curves shown in FIG. 5A. In other example embodiments, the load curve data are the power difference curves shown in FIG. 7. Each of the load curves is associated with at least one phase of the primary converter and the secondary converter.

At S1515, the controller adjusts or maintains the modulation frequency (e.g., $f_{PWM}$) of the at least one phase of the primary converter and the secondary converter consistent with an operation point on the obtained load curve. The operation point may be associated with a reduced thermal energy dissipated from the three phase DC-DC converter. For example, as described above, once the controller 48 estimates or observes the observed output load or commanded output load, the controller 48 attempts to find or lock-in one of the reference load curves (e.g., of $P_{Loss}$ versus $f_{PWM}$ shown in FIG. 5A) based on observed or commanded ratio or percentage of output load for a corresponding time interval.

Then, the controller 48 scans or sweeps the PWM frequency for the frequency range of this curve until the controller 48 identifies or determines a minimum loss point or minimum loss range on the load curve. For example, for the 50% load curve, the controller 48 will sweep PWM frequency to get to a minimum loss point on the 50% load curve, which can be designated as $P_{Loss\_min\_50\%\ Load}$ operating point. Then, the controller 48 operates or continues to operate the primary converter 151 and the secondary converter 251 at the PWM frequency $f_{PWM}$ or range associated with the corresponding identified operating point that minimizes power loss for the DC-DC converter, until the observed or commanded load (e.g., load percentage) is changed.

In another example, the power difference $P_{diff}$ is observed while sweeping PWM switching frequency on a load-dependent curve. Once a $P_{diff\_min}$ operating point is identified on a load-dependent curve, the controller 48 keeps operating at a self-tuned PWM frequency or a self-tuned modulation frequency until the load changes during a later or next sampling interval associated with the above current measurements and corresponding estimated currents.

The controller 48 generates the selected or determined modulation frequency to control the primary converter 151 and the secondary converter 251. For example, the controller 48 generates control signals or synchronized control signals to control the activation and deactivation of switches in the primary converter 151 and the secondary converter 251. In one example, the control signals are applied to the control terminal of the semiconductor switch, such as gate terminal or a base terminal of a transistor.

The load curve and the adjusting or maintaining a modulation frequency is performed for all three phases.

In addition, the controller may reduce an DC offset and/or balance phase currents at S1525. For example, the controller may perform the control logic illustrated in FIGS. 9A-9B to balance the phase currents of the DC-DC-converter, the control logic illustrated in FIGS. 10A-10B and/or the control logic illustrated in FIG. 14.

The methods and systems described herein minimize energy losses, improve system efficiency, and avoid transformer and series inductor saturation of DC-DC converters (e.g., a Three-Phase Dual-Active-Bridge (TP DAB)-based DC/DC converter). The methods and systems reduce cooling requirements for the active and passive components used in the DC-DC converter. In some embodiments, the control method and system can be configured to automatically adjust the three-phase currents via variable inductances, which in turn reduce the low frequency components (e.g., or near-DC current components attempting to flow through the transformer) of current flowing through the transformer, resulting in avoidance of the transformer saturation.

Certain configurations of the control systems and methods are configured to reduce neutral-point voltage shift in primary and secondary windings of isolation transformer, resulting in elimination/reduction in electromagnetic interface (EMI/EMC) issues caused by an appreciable shift underline neutral-point voltage. The control methods and systems also realize an increased safety system efficiency under conditions when output load varies from approximately ten percent (10%) to approximately one hundred percent (100%).

The control methods and systems (power-loss minimization or power-difference minimization) can be configured to facilitate the DC-DC converter operating at an efficient operating point on load curve (e.g., maximum possible efficiency). In some embodiments, the control methods and systems are configured to apply a power-loss minimization process or power-difference minimization process to reduce heat generation or the need for enhanced thermal heat dissipation of the DC-DC converter.

A reduced power loss of the DC-DC converter can facilitate a manageable thermal burden, where thermal design challenges can be addressed readily or can be realized or mitigated at reduced cost. In certain embodiments, the control methods and systems, such as power-loss minimization or power-difference minimization processes, facilitates potential performance optimization and size reduction of magnetic circuit of the DC-DC converter. In some embodiments, the transformer can be configured with a reduced size to allow for adequate thermal management based on control signals applied to the switches of the DC-DC converter.

The methods and systems can be configured to automatically adjust the three phase currents to minimize the DC offset current that flows through the transformer to avoid the transformer saturation. The control methods and systems can represent building blocks for machine learning models or other artificial intelligence models that are configured for self-sensing, self-training algorithms for the DC-DC converter. In some embodiments, the control methods and systems can compensate for identifiable variations in the transformer or electromagnetic circuit of the converter, such as variations identified by machine learning models or other artificial intelligence models. In certain configurations, real-time identification of variations in magnetic circuit and power components support tracking of these components while converter is operating in vehicle platform. In other configurations, self-sensing and self-tracking features could support diagnostics and prognostics of DC/DC converter. Further, detected variations of the method and system could be used to predict additional diagnostics and prognostics of DC-DC converter, where the electronic data processor could be configured with software instructions to determine and capture aging trend of the converter.

In some configurations of the DC-DC converter, the electronic data processor is configured to manage the DC offset by centralized control by duty control of switched in primary converter or by injecting programmable voltage source to alter value of series inductance so that DC off-set remains negligibly small value. The above innovative features when applied in control of dual-active bridge DC-DC converter can potentially provide an additional degree of freedom.

Further, the PWM modulation technique is applied to reduce and/or cancel effects of floating voltage at neutral connection of primary and secondary windings of the three-phase isolation transformer, which is either realized by three identical single-phase transformers or by a single three-phase transformer. Both techniques (PWM duty adjustment and voltage injection method) could address the technical issue of neutral point voltage shift. The control systems (e.g., PWM duty adjustment and voltage injection method) inherently bring two degrees of freedom in converter control to solve DC off-set current and neutral point voltage shift issues. The control systems (e.g., PWM duty adjustment and voltage injection method) address electromagnetic interference (EMI and EMC) issued caused by neutral point voltage shift.

Embodiments of the present disclosure may be described with reference to the following numbered clauses, with preferred features laid out in the dependent clauses:

1. A system comprising:

a three-phase direct-current-to-direct-current converter (DC-DC converter) including a three-phase primary converter coupled to a three-phase secondary converter via at least one transformer; and
a controller configured to cause the system to,
obtain a load curve based on an operational load ratio or percentage of the three-phase DC-DC converter, the load curve associated with at least one phase of the primary converter and the secondary converter, and
adjust or maintain a modulation frequency of the at least one phase of the primary converter and the secondary converter consistent with an operation point on the obtained load curve.

2. The system of clause 1, wherein the controller is configured to cause the system to adjust or maintain the modulation frequency for each of the three phases.

3. The system of clause 2, wherein the controller is configured to cause the system to, adjust a variable inductance of each phase to reduce a difference or offset between a primary low frequency signal component at the primary converter and a secondary low frequency component at the secondary converter, each variable inductance being coupled to the at least one transformer.

4. The system of clause 3, wherein the controller is configured to cause the system to, determine a saturation current to adjust the variable inductance for each phase.

5. The system of clause 4, wherein the controller is configured to cause the system to,

> determine a saturation adjustment for each phase;
> apply the saturation adjustment to the determined current to generate a commanded current; and
> apply the commanded current to adjust the variable inductance.

6. The system of clause 2, wherein the controller is configured to cause the system to,

> obtain a phase current for at least one phase of the DC-DC converter;
> filter the phase current to obtain a DC current;
> generate a duty offset based on the DC current; and
> generate a duty signal for the at least one phase based on the respective DC current and the duty offset.

7. The system of clause 6, wherein the controller is configured to cause the system to, adjust the PWM duty signal for at least one of a high-side switch or a low-side switch to inject a compensating DC current offset to reduce an existing DC current offset.

8. The system of clause 6 or 7, wherein the controller is configured to cause the system to, compare the DC current to an offset command, and
generate the duty offset based on the comparison.

9. The system of any of clauses 6 to 8, wherein the controller is configured to cause the system to,

> measure a neutral point voltage, and
> adjust the duty signal based on the neutral point voltage.

10. The system of clause 1, wherein the controller is configured to cause the system to, adjust a variable inductance of the at least one phase to reduce a difference or offset between a primary low frequency signal component at a primary and a secondary low frequency component at the secondary to minimize thermal energy, the variable inductance being coupled to a primary side of the at least one transformer.

11. The system of clause 10, wherein the controller is configured to cause the system to,
determine a saturation current to adjust the variable inductance.

12. The system of clause 11, wherein the controller is configured to cause the system to,

> determine a saturation adjustment;
> apply the saturation adjustment to the determined current to generate a commanded current; and
> apply the commanded current to adjust the variable inductance.

13. The system of clause 1, wherein the controller is configured to cause the system to, select the operation point, the operation point associated with a power loss minimization process based on the obtained load curve.

14. The system of clause 1, wherein the controller is configured to cause the system to, select the operation point, the operation point associated with a power difference minimization process between the power at primary DC terminals and secondary DC terminals.

15. The system of clause 1, wherein the operation point is associated with a reduced thermal energy dissipated from the three phase DC-DC converter.

16. A method of controlling a three-phase direct-current-to-direct-current converter (DC-DC converter) including a three-phase primary converter is coupled to a three-phase secondary converter via at least one transformer, the method comprising:

> obtaining a load curve based on an operational load ratio or percentage of the three-phase DC-DC converter, the load curve associated with at least one phase of the primary converter and the secondary converter; and
> adjusting or maintaining a modulation frequency of the at least one phase of the primary converter and the secondary converter consistent with an operation point on the obtained load curve.

17. The method of clause 16, wherein the obtaining a load curve and the adjusting or maintaining the modulation frequency is performed for each of the three phases.

18. The method of clause 17, wherein further comprising:
adjusting a variable inductance of each phase to reduce a difference or offset between a primary low frequency signal component at the primary converter and a secondary low frequency component at the secondary converter, each variable inductance being coupled to the at least one transformer.

19. The method of clause 18, wherein the adjusting the variable inductance includes, determining a saturation current to adjust the variable inductance for each phase.

20. The method of clause 19, wherein the adjusting the variable inductance includes,

determining a saturation adjustment for each phase;
applying the saturation adjustment to the determined current to generate a commanded current; and
applying the commanded current to adjust the variable inductance.

21. The method of clause 17, further comprising:

obtaining a phase current for at least one phase of the DC-DC converter;
filtering the phase current to obtain a DC current;
generating a duty offset based on the DC current; and
generating a duty signal for the at least one phase based on the respective DC current and the duty offset.

22. The method according to clause 21, wherein the generating the duty signal includes, adjusting the PWM duty signal for at least one of a high-side switch or a low-side switch to inject a compensating DC current offset to reduce an existing DC current offset.

23. The method of clause 21, wherein the generating the duty offset includes, comparing the DC current to an offset command and generating the duty offset based on the comparing.

24. The method of clause 21, wherein the generating the duty offset includes,

measuring a neutral point voltage, and
adjusting the duty signal based on the neutral point voltage.

25. The method of clause 16, further comprising:
adjusting a variable inductance of the at least one phase to reduce a difference or offset between a primary low frequency signal component at a primary and a secondary low frequency component at the secondary to minimize thermal energy, the variable inductance being coupled to a primary of the at least one transformer.

26. The method of clause 25, wherein the adjusting the variable inductance includes, determining a saturation current to adjust the variable inductance.

27. The method of clause 26, wherein the adjusting the variable inductance includes,

determining a saturation adjustment;
applying the saturation adjustment to the determined current to generate a commanded current; and
applying the commanded current to adjust the variable inductance.

28. The method according to clause 16, wherein the adjusting or maintaining includes, selecting the operation point, the operation point associated with a power loss minimization process based on the obtained load curve.

29. The method according to clause 16, wherein the adjusting or maintaining includes, selecting the operation point, the operation point associated with a power difference minimization process between the power at primary DC terminals and secondary DC terminals.

30. The method of clause 16, wherein the operation point is associated with a reduced thermal energy dissipated from the three phase DC-DC converter.

31. A system comprising:

a three-phase direct-current-to-direct-current converter (DC-DC converter) including a three-phase primary converter coupled to a three-phase secondary converter via at least one transformer; and
a controller configured to cause the system to,
adjust or maintain a modulation frequency of the at least one phase of the primary converter and the secondary converter consistent,
determine an offset present in the at least one phase, and
generate a duty signal for the at least one phase to reduce the offset.

32. The system of clause 31, wherein the offset is a DC current offset.

33. The system of clause 32, wherein the controller configured to cause the system to,

detect a neutral point voltage, and

adjust the duty signal based on the detected neutral point voltage.

34. A method of operating a three-phase direct-current-to-direct-current converter (DC-DC converter) including a three-phase primary converter coupled to a three-phase secondary converter via at least one transformer, the method comprising:

adjusting or maintaining a modulation frequency of the at least one phase of the primary converter and the secondary converter consistent;
determining an offset present in the at least one phase; and
generating a duty signal for the at least one phase to reduce the offset.

35. The method of clause 34, wherein the offset is a DC current offset.
36. The method of clause 35, further comprising:

detect a neutral point voltage; and
adjust the duty signal based on the detected neutral point voltage.

**Claims**

1. A system comprising:

a three-phase direct-current-to-direct-current converter (DC-DC converter) (100, 300) including a three-phase primary converter (151) coupled to a three-phase secondary converter (251) via at least one transformer (14); and
a controller (48) configured to cause the system to,

obtain a load curve based on an operational load ratio or percentage of the three-phase DC-DC converter (100, 300), the load curve associated with at least one phase of the primary converter (151) and the secondary converter (251), and
adjust or maintain a modulation frequency of the at least one phase of the primary converter (151) and the secondary converter (251) consistent with an operation point on the obtained load curve.

2. The system of claim 1, wherein the controller (48) is configured to cause the system to adjust or maintain the modulation frequency for each of the three phases.

3. The system of claim 2, wherein the controller (48) is configured to cause the system to,
adjust a variable inductance of each phase to reduce a difference or offset between a primary low frequency signal component at the primary converter (151) and a secondary low frequency component at the secondary converter (251), each variable inductance being coupled to the at least one transformer (14).

4. The system of claim 3, wherein the controller (48) is configured to cause the system to,
determine a saturation current to adjust the variable inductance for each phase.

5. The system of claim 4, wherein the controller (48) is configured to cause the system to,

determine a saturation adjustment for each phase;
apply the saturation adjustment to the determined current to generate a commanded current; and
apply the commanded current to adjust the variable inductance.

6. The system of claim 2, wherein the controller (48) is configured to cause the system to,

obtain a phase current for at least one phase of the DC-DC converter (100, 300);
filter the phase current to obtain a DC current;
generate a duty offset based on the DC current; and
generate a duty signal for the at least one phase based on the respective DC current and the duty offset.

7. The system of claim 6, wherein the controller (48) is configured to cause the system to,
adjust the PWM duty signal for at least one of a high-side switch or a low-side switch to inject a compensating DC current offset to reduce an existing DC current offset.

8. The system of claim 6 or 7, wherein the controller (48) is configured to cause the system to,

compare the DC current to an offset command, and
generate the duty offset based on the comparison.

9. The system of any of claims 6 to 8, wherein the controller (48) is configured to cause the system to,

measure a neutral point voltage, and
adjust the duty signal based on the neutral point voltage.

10. The system of claim 1, wherein the controller (48) is configured to cause the system to,
adjust a variable inductance of the at least one phase to reduce a difference or offset between a primary low frequency signal component at a primary and a secondary low frequency component at the secondary to minimize thermal energy, the variable inductance being coupled to a primary side of the at least one transformer (14).

11. The system of claim 10, wherein the controller (48) is configured to cause the system to,
determine a saturation current to adjust the variable inductance.

12. The system of claim 11, wherein the controller (48) is configured to cause the system to,

determine a saturation adjustment;
apply the saturation adjustment to the determined current to generate a commanded current; and
apply the commanded current to adjust the variable inductance.

13. The system of claim 1, wherein the controller (48) is configured to cause the system to,
select the operation point, the operation point associated with a power loss minimization process based on the obtained load curve.

14. The system of claim 1, wherein the controller (48) is configured to cause the system to,
select the operation point, the operation point associated with a power difference minimization process between the power at primary DC terminals and secondary DC terminals.

15. The system of claim 1, wherein the operation point is associated with a reduced thermal energy dissipated from the three phase DC-DC converter (100, 300).

FIG. 1

EP 4 369 581 A1

FIG. 2A

FIG. 2B

FIG. 3

EP 4 369 581 A1

FIG. 4A

FIG. 4B

FIG. 5A

$f_{PWM}$

$P_{loss}$

$505$

$510$

$515$

$518$

$520$

$(P_{loss\_min\_50\%\_load})$

FIG. 5B

$i_{xsat}$

$L_x$

$525$

$L_{Xsermax}$

$L_{Xsermin}$

Switching functions of primary converter

Switching functions of secondary converter

Switching functions for $i_{Xsat}$ generator ⟋— S600

Estimate power loss in primary converter using $V_{in}$, $i_{Xpri}$, and converter switching functions ⟵— S602

Estimate power loss in secondary converter using $V_{out}$, $i_{Xsec}$, and converter switching functions.

Estimate power loss in magnetic circuit = $f(V, i_{Xpri}, V_{out}, i_{Xsec},$ PWM signals)

Total loss $(P_{Loss})$ = Primary converter loss + secondary converter loss + magnetic circuit loss ⟵— S606

Observe trend in $P_{Loss}$ as function of PWM frequency

Generate PWM signals for primary and secondary converters ⟵— S610

Estimate $i_{Xsat}$ required and generate switching functions for $i_{Xsat}$ generator block

$V_{in}$

S604

S605

S608

$i_{Xpri}$

S612

48

$V_{out}$

$i_{xsec}$

FIG. 6

EP 4 369 581 A1

FIG. 7

Switching functions of primary converter

Switching functions of secondary converter

48

Switching functions for $i_{Xsat}$ generator — S800

Estimate $i_{in}$ by using primary-converter's switching functions and sensed current $i_{Xpri}$ — S802

$V_{in}$

$V_{out}$

S804 — Estimation of $i_{out}$ by using secondary-converter switching functions and sensed current $i_{Xsec}$

Calculate difference ($P_{diff}$) between input power ($V_{in} \times i_{in}$) and output power ($V_{out} \times i_{out}$) — S806

S808 — Execute frequency sweep near operating point of % load commanded ($V_{out} \times i_{out}$ /100)

Observe trend in $P_{diff} = (V_{in} \times i_{in} - V_{out} \times i_{out})$ — S810

S812 — Generate PWM signals for primary and secondary converters

$i_{Xpri}$

$i_{Xsec}$

Estimate $i_{Xsat}$ required and generate switching functions for $i_{Xsat}$ generator block — S814

FIG. 8

EP 4 369 581 A1

Switching functions of primary converter

Switching functions of secondary converter

$i_{Xsat\_cmd}$

48

$i_{Xsat\_adj}$

+ 902

+

Switching functions for $i_{Xsat}$ generator

S800

Estimate $i_{in}$ by using primary-converter's switching functions and sensed current $i_{Xpri}$

Estimation of $i_{out}$ by using secondary-converter switching functions and sensed current $i_{Xsec}$

Calculate difference ($P_{diff}$) between input power ($V_{in} \times i_{in}$) and output power ($V_{out} \times i_{out}$)

Execute frequency sweep near operating point of % load commanded ($V_{out} \times i_{out}$ /100)

Observe trend in $P_{diff}$ = ($V_{in} \times i_{in}$ - $V_{out} \times i_{out}$)

Generate PWM signals for primary and secondary converters

Estimate $i_{Xsat}$ required and generate switching functions for $i_{Xsat}$ generator block

$V_{in}$

$V_{out}$

$i_{Xpri}$

$i_{Xsec}$

FIG. 9A

FIG. 9B

FIG. 10A

FIG. 10B

EP 4 369 581 A1

FIG. 11A   Duty offset d = 0

FIG. 11B   Duty offset d > 0

FIG. 11C   Duty offset d < 0

FIG. 12

FIG. 13

FIG. 14

```
┌─────────────────────────────────┐
│   Obtain Load Curve Data for     │──── S1505
│ Three-Phase DC-to-DC Converter   │
└─────────────────────────────────┘
                │
                ▼
┌─────────────────────────────────┐
│  Adjust or Maintain Modulation   │──── S1515
│          Frequency               │
└─────────────────────────────────┘
                ╎
                ▼
┌ ─ ─ ─ ─ ─ ─ ─ ─ ─ ─ ─ ─ ─ ─ ─ ─ ┐
│  Reduce DC Offset and/or Balance  ╎──── S1525
   Phase Currents                  │
└ ─ ─ ─ ─ ─ ─ ─ ─ ─ ─ ─ ─ ─ ─ ─ ─ ┘
```

FIG. 15

Europäisches
Patentamt

European
Patent Office

Office européen
des brevets

# EUROPEAN SEARCH REPORT

Application Number

EP 23 20 8354

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 806 306 A1 (DEERE & CO [US]) 14 April 2021 (2021-04-14) * abstract * * paragraphs [0020], [0077]; figures 1-9 * | 1-15 | INV. H02M1/00 H02M1/40 H02M3/00 H02M3/335 |
| A | EP 4 007 148 A1 (DEERE & CO [US]) 1 June 2022 (2022-06-01) * abstract * * paragraph [0011]; figures 1, 2 * | 1-15 | |
| A | YAZDANI FARZAD ET AL: "Analysis of a three-phase dual active bridge converter during the deadband", 2017 IEEE INTERNATIONAL CONFERENCE ON ENVIRONMENT AND ELECTRICAL ENGINEERING AND 2017 IEEE INDUSTRIAL AND COMMERCIAL POWER SYSTEMS EUROPE (EEEIC / I&CPS EUROPE), IEEE, 6 June 2017 (2017-06-06), pages 1-6, XP033118037, DOI: 10.1109/EEEIC.2017.7977811 [retrieved on 2017-07-12] * abstract * * Section II. OPERATION OF THE THREE-PHASE DAB DC-DC CONVERTER DURING THE DEADBAND; figure 2 * | 1-15 | |

TECHNICAL FIELDS
SEARCHED      (IPC)

H02M

-/--

The present search report has been drawn up for all claims

| Place of search | Date of completion of the search | Examiner |
|---|---|---|
| The Hague | 22 March 2024 | Van der Meer, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt

European Patent Office

Office européen des brevets

## EUROPEAN SEARCH REPORT

Application Number

EP 23 20 8354

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LE TAT-THANG ET AL: "Open-Circuit Fault-Tolerant Control for a Three-Phase Current-Fed Dual Active Bridge DC-DC Converter", IEEE TRANSACTIONS ON INDUSTRIAL ELECTRONICS, IEEE SERVICE CENTER, PISCATAWAY, NJ, USA, vol. 70, no. 2, 8 March 2022 (2022-03-08), pages 1586-1596, XP011922515, ISSN: 0278-0046, DOI: 10.1109/TIE.2022.3156036 [retrieved on 2022-03-09] * abstract * * page 1587, right-hand column, paragraph 5; figures 1, 2 * ----- | 1-15 | |

TECHNICAL FIELDS SEARCHED (IPC)

The present search report has been drawn up for all claims

| Place of search | Date of completion of the search | Examiner |
|---|---|---|
| The Hague | 22 March 2024 | Van der Meer, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 8354

This annex lists the patent family members relating to the patent documents cited in the above-mentioned European search report.
The members are as contained in the European Patent Office EDP file on
The European Patent Office is in no way liable for these particulars which are merely given for the purpose of information.

22-03-2024

| Patent document cited in search report | | Publication date | Patent family member(s) | | Publication date |
|---|---|---|---|---|---|
| EP 3806306 | A1 | 14-04-2021 | EP | 3806306 A1 | 14-04-2021 |
| | | | US | 10749441 B1 | 18-08-2020 |
| EP 4007148 | A1 | 01-06-2022 | EP | 4007148 A1 | 01-06-2022 |
| | | | US | 2022263405 A1 | 18-08-2022 |

**EP 4 369 581 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 63382792

- US 10749441 B